(19) Europäisches Patentamt
European Patent Office
Office européen des brevets

(11) **EP 3 228 195 B1**

(12) **EUROPEAN PATENT SPECIFICATION**

(45) Date of publication and mention
of the grant of the patent:
**01.01.2020 Bulletin 2020/01**

(51) Int Cl.:
*A23F 5/10* *(2006.01)* *A23F 5/24* *(2006.01)*
*A23F 5/20* *(2006.01)*

(21) Application number: **15864378.3**

(86) International application number:
**PCT/JP2015/081708**

(22) Date of filing: **11.11.2015**

(87) International publication number:
**WO 2016/088520 (09.06.2016 Gazette 2016/23)**

(54) **ROASTED COFFEE BEANS**

GERÖSTETE KAFFEEBOHNEN

GRAINS DE CAFÉ TORRÉFIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2014 JP 2014244371
09.02.2015 JP 2015022939**

(43) Date of publication of application:
**11.10.2017 Bulletin 2017/41**

(73) Proprietor: **Kao Corporation
Chuo-ku
Tokyo 103-8210 (JP)**

(72) Inventors:
• **OKAMURA, Yusuke
Tokyo 131-8501 (JP)**
• **OHMINAMI, Hideo
Tochigi 321-3497 (JP)**

• **KUSAURA, Tatsuya
Tokyo 131-8501 (JP)**
• **HASHIZUME, Kohjiro
Tochigi 321-3497 (JP)**

(74) Representative: **Hoffmann Eitle
Patent- und Rechtsanwälte PartmbB
Arabellastraße 30
81925 München (DE)**

(56) References cited:
**EP-A1- 0 151 202         JP-A- S5 318 772
JP-A- H04 229 140       JP-A- 2008 509 687
JP-A- 2009 501 545      JP-A- 2011 097 832
JP-A- 2013 000 077      JP-A- 2013 226 106
US-A- 3 843 824           US-A- 3 843 824
US-A- 4 247 570           US-A- 4 411 923
US-A- 4 411 923           US-A1- 2012 328 762**

**Description**

Field of the Invention

The present invention relates to roasted coffee beans.

Background of the Invention

Coffee beverages are very popular and favorite tasty beverages, and the taste and flavor of a coffee beverage is characterized by the kind of coffee beans to be used as a raw material or a roasting method therefor. However, roasting of coffee beans may cause not only decomposition of a considerable amount of chlorogenic acids but also generation of impurity, and this may likely enhance coarseness to lead to an imbalance of taste and flavor. Accordingly, as roasted coffee beans useful as a raw material for a coffee beverage having suppressed coarseness, for example, there have been proposed: roasted coffee beans having an L value of more than 20 and less than 25 and containing, per kg of the roasted coffee beans, 10 mg or more of hydroquinone and 50 mg or less of hydroxyhydroquinone (Patent Document 1) ; and roasted coffee beans having an L value of from 25 to 38 and containing, per kg of the roasted coffee beans, 7.1 mg or more of hydroquinone and 38 mg or less of hydroxyhydroquinone (Patent Document 2).

In addition, chlorogenic acids contained in a coffee beverage are known to have physiological effects, but it has been reported that the physiological effects of the chlorogenic acids are inhibited by hydroxyhydroquinone coexisting therewith. Accordingly, there have been proposed, as roasted coffee beans that are rich in chlorogenic acids and have a reduced hydroxyhydroquinone content, roasted coffee beans having an L value of from 10 to 20 and a mass ratio of hydroxyhydroquinone/hydroquinone of 3.5 or less, and containing from 0.3 g to 1.5 g of chlorogenic acids per 100 g of the roasted coffee beans (Patent Document 3).

Meanwhile, it has been reported that 5-hydroxymethylfurfural is metabolized in vivo into 5-hydroxymethylfuran-2-carboxylic acid and is a component capable of preventing occurrence of causes of lifestyle-related diseases, such as hyperlipidemia, diabetes, arteriosclerosis, thrombus, and hepatitis, and maintaining good health (Patent Document 4). It has also been reported that 5-hydroxymethylfurfural in a concentrated coffee composition is involved in coarseness remaining in the mouth after drinking (Patent Document 5).

Further, caffeine is known as a bitterness component of a coffee beverage, and it has been reported that caffeine can be removed from green coffee beans by subjecting wet green coffee beans to supercritical carbon dioxide extraction (Patent Documents 6 to 8). Meanwhile, it has also been reported that aroma components of coffee are removed by subjecting roasted coffee beans to supercritical carbon dioxide extraction (Patent Document 9).

[Patent Document 1] JP-A-2012-183035
[Patent Document 2] JP-A-2013-110972
[Patent Document 3] JP-A-2011-223996
[Patent Document 4] JP-A-2008-193933
[Patent Document 5] JP-A-2012-095647
[Patent Document 6] JP-A-03-160949
[Patent Document 7] JP-A-01-309640
[Patent Document 8] JP-A-02-20249
[Patent Document 9] JP-A-03-127973

US 4,247,570 relates to a process for decaffeinating coffee, comprising extraction of moist coffee with supercritical carbon dioxide in the presence of an adsorbent US 3,843,824 describes a process for decaffeinating coffee, comprising the separation of oil components from the coffee, wetting the coffee, extracting the wetted coffee with supercritical $CO_2$ and finally adding the previously separated oil components.

US 4,411,923 is directed to a process for decaffeinating coffee, comprising extraction of the coffee with supercritical $CO_2$ and removal of the caffeine from the extraction solvent using an ion exchanger.

US 2012/0328762 relates to refined roasted coffee beans, which are prepared by treating raw material roasted coffee beans with an aqueous solvent.

EP 0 151 202 describes a procedure for preparing a decaffeinated coffee or tea extract powder, comprising the the steps of extraction of aroma compounds with dry supercritical gas (such as $CO_2$ in particular), extraction of caffeine with wet supercritical gas, extraction of water-soluble components with water, mixing the extracts of 1 and 3 and freeze drying.

Summary of the Invention

The present invention provides a method of producing roasted coffee beans, comprising:

a first step of adding water to raw material roasted coffee beans, wherein the amount of the water is from 5 mass% to 110 mass% with respect to that of the raw material roasted coffee beans, followed by heating of the resultant; and a second step of subjecting the raw material roasted coffee beans after the first step to supercritical carbon dioxide extraction.

The present invention provides roasted coffee beans having an L value of from 15 to 45, the roasted coffee beans comprising, per kg of the roasted coffee beans, 6.0 g to 90.0 g of a chlorogenic acid (A), 50 mg or less of hydroxyhydroquinone (B), 70 mg or less of 5-hydroxymethylfurfural (C), and 9.0 g or less of caffeine (D) .
The present invention provides a coffee beverage, comprising:

0.01 mass% to 0.45 mass% of a chlorogenic acid (A);

2 ppm by mass or less of hydroxyhydroquinone (B) ;

3 ppm by mass or less of 5-hydroxymethylfurfural (C); and

0.04 mass% or less of caffeine (D).

Detailed Description of the Invention

The present invention relates to roasted coffee beans useful as a raw material for a coffee beverage having suppressed coarseness, and having a clean aftertaste and a favorable taste, and a method of producing the roasted coffee beans.
The inventors of the present invention made investigations, and as a result, found that when the contents of specific components in roasted coffee beans having a specific degree of roasting were controlled to specific ranges, roasted coffee beans useful as a raw material for a coffee beverage having suppressed coarseness, and having a clean aftertaste and a favorable taste were produced. The term "aftertaste" as used herein refers to "feeling that remains in the mouth" disclosed in JIS Z 8144:2004.
According to the present invention, roasted coffee beans useful as a raw material for a coffee beverage having suppressed coarseness, and having a clean aftertaste and a favorable taste can be provided. According to the present invention, such roasted coffee beans can also be produced efficiently by a simple operation without reducing the amount of a chlorogenic acid. According to the present invention, a coffee beverage having suppressed coarseness, and having a clean aftertaste and a favorable taste can also be provided.

[Method of Producing Roasted Coffee Beans]

A method of producing roasted coffee beans of the present invention comprises: a first step of adding water to raw material roasted coffee beans, followed by heating of the resultant; and a second step of subjecting the raw material roasted coffee beans after the first step to supercritical carbon dioxide extraction.
Ground raw material roasted coffee beans or unground raw material roasted coffee beans may be appropriately selected and used as the raw material roasted coffee beans. Coffee beans having an average particle size described in the first embodiment to be described later may be used as the ground raw material roasted coffee beans.
Examples of the bean species of the raw material roasted coffee beans include arabica, robusta, liberica, and arabusta. In addition, the producing region of the coffee beans is not particularly limited, and examples thereof may include Brazil, Colombia, Tanzania, Mocha, Kilimanjaro, Mandheling, Blue Mountain, Guatemala, Vietnam, and Indonesia.
The raw material roasted coffee beans may be obtained by roasting green coffee beans or by further roasting roasted coffee beans. A method of roasting coffee beans is not particularly limited, and a known method may be appropriately selected. In addition, conditions of roasting may be appropriately selected to achieve a desired degree of roasting.
The L value of the raw material roasted coffee beans is preferably 15 or more, more preferably 15.5 or more, more preferably 16 or more, more preferably 16.5 or more, even more preferably 17 or more, from the viewpoint of reducing the amount of hydroxyhydroquinone. In addition, the L value of the raw material roasted coffee beans is preferably 45 or less, more preferably 43 or less, more preferably 40 or less, even more preferably 35 or less, from the viewpoint of taste and flavor. The L value ranges preferably from 15 to 45, more preferably from 15.5 to 43, more preferably from 16 to 40, more preferably from 16.5 to 35, even more preferably from 17 to 35.

The raw material roasted coffee beans may be used singly or as a mixture of two or more thereof. When two or more of raw material roasted coffee beans are used, not only coffee beans different in bean species or producing region but also coffee beans different in degree of roasting can be used. When coffee beans different in degree of roasting are used, coffee beans having L values falling out of the above-mentioned range may be used, but coffee beans to be used are preferably appropriately combined so that the average of L values may fall within the above-mentioned range. The average of L values is determined as a sum of values each determined by multiplying an L value of raw material roasted coffee beans to be used by a content mass ratio of the raw material roasted coffee beans.

An amount of water added in the first step is not necessarily enough for immersing the raw material roasted coffee beans in the water, and the amount may be one enough for bringing part of the surfaces of the raw material roasted coffee beans into contact with the water to make the coffee beans in a wet state. For this purpose, the amount of the water added in the first step is from 5 mass% to 110 mass% with respect to that of the raw material roasted coffee beans, and as a preferred amount of the water added, any of conditions described in the first embodiment and second embodiment to be described later is applicable.

The conditions of the heating in the first step and the conditions of the supercritical carbon dioxide extraction in the second step may be appropriately selected so that desired roasted coffee beans can be produced. For example, any of conditions described in the first embodiment and second embodiment to be described later is applicable.

The present invention is described below in detail on the basis of preferred embodiments.

<First Embodiment>

The method of producing roasted coffee beans according to one embodiment of the present invention comprises the following first step and second step. The steps are described below in detail.

(First Step)

The first step is a step of adding water to ground raw material roasted coffee beans, followed by heating of the resultant for from 0.3 hour to 10 hours. By this treatment, hydroxyhydroquinone can be selectively removed from the raw material roasted coffee beans without any reduction in content of a chlorogenic acid.

The bean species and producing region of the raw material roasted coffee beans are not particularly limited, and examples thereof may include the bean species and producing regions described above.

The L value of the raw material roasted coffee beans is preferably 15 ormore, morepreferably 15.5 or more, more preferably 16 or more, more preferably 16.5 or more, even more preferably 17 or more, from the viewpoint of reducing the amount of the hydroxyhydroquinone. In addition, the L value is preferably 45 or less, more preferably 43 or less, more preferably 40 or less, even more preferably 35 or less, from the viewpoint of taste and flavor. The L value ranges preferably from 15 to 45, more preferably from 15.5 to 43, more preferably from 16 to 40, more preferably from 16.5 to 35, even more preferably from 17 to 35.

The raw material roasted coffee beans may be used singly or as a mixture of two or more thereof. When two or more of raw material roasted coffee beans are used, roasted coffee beans different in bean species, producing region, and L value may be appropriately selected and used.

The raw material roasted coffee beans are used after grinding, and a device to be used for the grinding of the raw material roasted coffee beans is not particularly limited as long as the device can grind coffee beans to achieve a desired particle size. Examples of the device for the grinding may include grinding devices, such as a cutter mill, a hammer mill, a jet mill, an impact mill, and a Wiley pulverizer.

The average particle size of the ground raw material roasted coffee beans is preferably 5 mm or less, more preferably 2.5 mm or less, even more preferably 1.5 mm or less, from the viewpoint of reducing the amount of the hydroxyhydroquinone. In addition, the average particle size of the ground raw material roasted coffee beans is preferably 0.001 mm or more, more preferably 0.01 mm or more, even more preferably 0.05 mm or more, from the viewpoint of production efficiency. The average particle size ranges preferably from 0.001 mm to 5 mm, more preferably from 0.01 mm to 2.5 mm, even more preferably from 0.05 mm to 1.5 mm.

The water to be added to the raw material roasted coffee beans is not particularly limited, and for example, tap water, distilled water, ion-exchange water, or natural water may be appropriately selected and used. In addition, the temperature of the water to be added is desirably a temperature close to a retention temperature to be described later, and is preferably from 10°C to 80°C, more preferably from 15°C to 70°C, more preferably from 18°C to 50°C, even more preferably from 18°C to 25°C, from the viewpoint of ease in controlling the temperature of the water.

A method for the addition of the water is not particularly limited, and examples thereof may include a method involving directly adding the water and a method involving spraying the water. In addition, the raw material roasted coffee beans are preferably mixed with stirring after or while the water is added. The water may be added under normal pressure, under reduced pressure, or under elevated pressure, and from the viewpoint of ease in adding the water, the water is desirably added under normal pressure. In addition, the temperature of the roasted coffee beans at the time of the addition of the water is preferably from 10°C to 80°C, more preferably from 15°C to 70°C, more preferably from 15°C to 30°C, even more preferably from 18°C to 25°C.

An amount of water added is not necessarily enough for immersing the raw material roasted coffee beans in the water, and the amount may be one enough for bringing part of the surfaces of the raw material roasted coffee beans into contact with the water. Specifically, the amount of the water added is 5 mass% or more, preferably 10 mass% or more, more preferably 20 mass% or more, even more preferably 30 mass% or more, with respect to that of the raw material roasted coffee beans, from the viewpoints of reducing the amount of the hydroxyhydroquinone, and a balance of taste and flavor. In addition, the amount of the water added is 110 mass% or less, preferably 105 mass% or less, even more preferably 100 mass% or less, from the viewpoint of preventing elution of the chlorogenic acid. The amount of the water added ranges from 5 mass% to 110 mass%, preferably from 10 mass% to 110 mass%, more preferably from 20 mass% to 105 mass%, even more preferably from 30 mass% to 100 mass%, with respect to that of the raw material roasted coffee beans.

The entire amount of the water may be added continuously or in several batches.

In addition, the temperature of an atmosphere at the time of the addition of the water is desirably a temperature close to a heating temperature to be described later, and is preferably from 10°C to 80°C, more preferably from 15°C to 70°C, more preferably from 18°C to 50°C, even more preferably from 18°C to 25°C, from the viewpoint of ease in controlling the temperature.

After the addition of the water, the raw material roasted coffee beans are heated to a desired temperature.

The heating temperature is preferably 20°C or more, more preferably 25°C or more, more preferably 30°C or more, even more preferably 35°C or more, from the viewpoints of a reduction in amount of the hydroxyhydroquinone and production efficiency. In addition, the heating temperature is preferably 80°C or less, more preferably 70°C or less, more preferably 60°C or less, even more preferably 50°C or less, from the viewpoint of a balance of taste and flavor. The heating temperature ranges preferably from 20°C to 80°C, more preferably from 25°C to 70°C, more preferably from 30°C to 60°C, even more preferably from 35°C to 50°C.

The heating time is from 0.3 hour to 10 hours, and is preferably 0.5 hour or more, more preferably 1 hour or more, more preferably 2 hours or more, even more preferably 3 hours or more, from the viewpoint of reducing the amount of the hydroxyhydroquinone. In addition, the heating time is preferably 9 hours or less, more preferably 8 hours or less, even more preferably 7 hours or less, from the viewpoint of a balance of taste and flavor. The heating time ranges preferably from 0.5 hour to 9 hours, more preferably from 1 hour to 8 hours, more preferably from 2 hours to 7 hours, even more preferably from 3 hours to 7 hours. When a device controlled to a predetermined temperature in advance is used, the term "heating time" as used herein refers to a time elapsed after the raw material roasted coffee beans are placed in the device. In addition, when the temperature is set after the raw material roasted coffee beans are placed in a device, the term refers to a time elapsed after the temperature reaches a predetermined temperature. A device, such as a thermostatic chamber, a drying machine, or an autoclave, may be appropriately selected as a device for heating. In addition, a heat treatment may be carried out under normal pressure, under elevated pressure, or under reduced pressure, and is preferably carried out under normal pressure from the viewpoint of a balance of taste and flavor.

The heating time may be appropriately selected depending on the heating temperature. For example, when the heating temperature is from 20°C to 40°C, the heating time is preferably from 4 hours to 12 hours, more preferably from 6 hours to 10 hours, even more preferably from 6 hours to 8 hours. Meanwhile, when the heating temperature is more than 40°C and 60°C or less, the heating time is preferably from 3 hours to 9 hours, more preferably from 4 hours to 8 hours, even more preferably from 5 hours to 7 hours.

Inaddition, the heat treatment is carried out preferably in a sealed state. The term "sealed state" as used herein refers to a state in which flow of steam or a gas, such as air, is blocked to prevent the raw material roasted coffee beans from being in direct contact with an open atmosphere system. For example, raw material roasted coffee beans having been brought into contact with water may be placed in a sealed container and heated. The shape and material of the sealed container are not particularly limited as long as the container can block gas flow, and a pressure-resistant container that does not change in property by heating is preferred. Examples of the sealed container may include a metallic container and a glass container. Specific examples of the sealed container include a retort pouch, a can, a bottle, and a beaker. The can, pin, or beaker is preferably sealable, openable, and closable by means of a stopple or a lid.

After the first step, the roasted coffee beans may be taken out from a device and cooled, or may be subj ected to a subsequent step without cooling.

(Second Step)

The second step is a step of subjecting the raw material roasted coffee beans after the first step to supercritical carbon dioxide extraction. This makes it possible to remove caffeine and impurity duetoaroast, such as 5-hydroxymethylfurfural, from the raw material roasted coffee beans.

The term "supercritical carbon dioxide" as used herein refers to carbon dioxide in a fluid state under conditions of a pressure of 7 MPa or more and a temperature of 31°C or more. In addition, the term "supercritical carbon dioxide extraction" refers to an extraction method involving using such carbon dioxide in a supercritical state as a medium for extraction. A known method can be adopted for the extraction operation, and a device for extraction that has been generally used can be used. The supercritical carbon dioxide extraction maybe carried out in the presence of an entrainer. Here, it is known that, when a second medium for extraction is added to supercritical carbon dioxide, the solubility for a specific solute varies remarkably. The phenomenon is referred to as "entrainer effect," and the second medium for extraction is referred to as "entrainer."

The entrainer is, for example, water, such as tap water, distilled water, ion-exchange water, or natural water. For example, a method described in the second embodiment to be described later may be adopted as a method of performing the supercritical carbon dioxide extraction in the presence of the entrainer.

The pressure condition in the supercritical carbon dioxide extraction is preferably 8 MPa or more, more preferably 12 MPa or more, even more preferably 20 MPa or more, and is preferably 50 MPa or less, more preferably 40 MPa or less, even more preferably 35 MPa or less, from the viewpoints of suppressing coarseness and improving an aftertaste. The pressure ranges preferably from 8 MPa to 50 MPa, more preferably from 12 MPa to 40 MPa, even more preferably from 20 MPa to 35 MPa.

In addition, the extraction temperature is preferably 35°C or more, more preferably 40°C or more, even more preferably 50°C or more, and is preferably 100°C or less, more preferably 90°C or less, even more preferably 80°C or less, from the viewpoints of suppressing coarseness and improving an aftertaste. The extraction temperature ranges preferably from 35°C to 100°C, more preferably from 40°C to 90°C, even more preferably from 50°C to 80°C.

The extraction time is preferably 0.5 hour or more, more preferably 1 hour or more, more preferably 2 hours or more, even more preferably 3.5 hours or more, and is preferably 10 hours or less, more preferably 9 hours or less, even more preferably 8 hours or less, from the viewpoints of suppressing coarseness and improving an aftertaste. The extraction time ranges preferably from 0.5 hour to 10 hours, more preferably from 1 hour to 9 hours, more preferably from 2 hours to 8 hours, even more preferably from 3.5 hours to 8 hours.

The extraction ratio (carbon dioxide (in terms of volume of gas at normal temperature and normal pressure)/raw material roasted coffee beans) is preferably 0.01 ($m^3/g$) or more, more preferably 0.02 ($m^3/g$) or more, more preferably 0.04 ($m^3/g$) or more, even more preferably 0.06 ($m^3/g$) or more, and is preferably 0.20 ($m^3/g$) or less, more preferably 0.16 ($m^3/g$) or less, even more preferably 0.12 ($m^3/g$) or less, from the viewpoints of suppressing coarseness and improving an aftertaste. The extraction ratio ranges preferably from 0.01 ($m^3/g$) to 0.20 ($m^3/g$), more preferably from 0.02 ($m^3/g$) to 0.16 ($m^3/g$), more preferably from 0.04 ($m^3/g$) to 0.12 ($m^3/g$), even more preferably from 0.06 ($m^3/g$) to 0.12 ($m^3/g$). The term "normal temperature and normal pressure" as used herein refers to a state of a temperature of $20 \pm 15$°C and a pressure of 101,325 Pa (standard atmospheric pressure) ("Glossary of Technical Terms in Japanese Industrial Standards" edited by Japanese Standards Association, 5th edition, Japanese Standards Association, March 30, 2001).

In addition, when supercritical carbon dioxide is caused to pass through an extraction tank to be brought into contact with the raw material roasted coffee beans, the flow rate of the carbon dioxide (in terms of volume of gas at normal temperature and normal pressure) is preferably 0.1 $m^3/h$ or more, more preferably 0.3 $m^3/h$ or more, more preferably 0.5 $m^3/h$ or more, even more preferably 0.7 $m^3/h$ or more, and is preferably 3 $m^3/h$ or less, more preferably 2 $m^3/h$, even more preferably 1.5 $m^3/h$ or less, from the viewpoints of suppressing coarseness and improving an aftertaste, though the preferred value varies depending on the volume of the extraction tank. In addition, the flow rate of the supercritical carbon dioxide (in terms of volume of gas at normal temperature and normal pressure) ranges preferably from 0.1 $m^3/h$ to 3 $m^3/h$, more preferably from 0.3 $m^3/h$ to 2 $m^3/h$, more preferably from 0.5 $m^3/h$ to 1.5 $m^3/h$, even more preferably from 0.7 $m^3/h$ to 1.5 $m^3/h$.

<Second Embodiment>

The method of producing roasted coffee beans according to another embodiment of the present invention comprises the following first step and second step. The steps are described below in detail.

(First Step)

The first step is a step of adding water to unground raw material roasted coffee beans, followed by heating of the resultant. With this, hydroxyhydroquinone can be selectively removed from the raw material roasted coffee beans without any reduction in content of a chlorogenic acid.

This step differs from that of the first embodiment in that unground whole-grain roasted coffee beans are used as the raw material roasted coffee beans. Specific constructions of the bean species, producing region, and L value of the raw material roasted coffee beans are as described in the first embodiment, and two or more of raw material roasted coffee beans different in one or more of bean species, producing region, and L value may be mixed and used.

The water to be added to the raw material roasted coffee beans is not particularly limited, and for example, tap water, distilled water, ion-exchange water, or natural water may be appropriately selected and used.

The water may be added under normal pressure, under reduced pressure, or under elevated pressure, and from the viewpoint of ease in adding the water, the water is desirably added under normal pressure. In addition, the temperature of the roasted coffee beans at the time of the addition of the water is preferably from 10°C to 80°C, more preferably from 15°C to 70°C, more preferably from 15°C to 30°C, even more preferably from 18°C to 25°C.

The amount of the water added is 5 mass% or more, preferably 10 mass% or more, more preferably 15 mass% or more, even more preferably 20 mass% or more, with respect to that of the raw material roasted coffee beans, from the viewpoints of reducing the amount of the hydroxyhydroquinone and the suppression of coarseness. In addition, the amount of the water added is 110 mass% or less, preferably 100 mass% or less, more preferably 90 mass% or less, more preferably 80 mass% or less, more preferably 70 mass% or less, more preferably 60 mass% or less, even more preferably 50 mass% or less, from the viewpoint of preventing elution of the chlorogenic acid. The amount of the water added ranges from 5 mass% to 110 mass%, preferably from 10 mass% to 100 mass%, more preferably from 15 mass% to 90 mass%, more preferably from 15 mass% to 80 mass%, more preferably from 15 mass% to 60 mass%, even more preferably from 20 mass% to 50 mass%, with respect to that of the raw material roasted coffee beans.

A method of adding the water is not particularly limited as long as the raw material roasted coffee beans can be moistened, and examples thereof may include a method involving adding the water directly to the raw material roasted coffee beans, a method involving spraying the water to the raw material roasted coffee beans, and a method involving bringing the raw material roasted coffee beans into contact with steam. The entire amount of the water may be added continuously or in several batches.

The temperature of the water to be added may be appropriately selected depending on the method of adding the water, and is usually from 10°C to 100°C, preferably from 10°C to 80°C, more preferably from 15°C to 70°C, more preferably from 18°C to 50°C, even more preferably from 18°C to 25°C, from the viewpoint of ease in controlling the temperature of the water. The temperature of an atmosphere at the time of the addition of the water may also be appropriately selected depending on the method of adding the water, but is desirably a temperature close to a heating temperature to be described later. Accordingly, the temperature of the atmosphere at the time of the addition of the water is preferably from 50°C to 150°C, more preferably from 60°C to 140°C, more preferably from 70°C to 130°C, even more preferably from 80°C to 120°C. Meanwhile, the temperature of the atmosphere at the time of the addition of the water is preferably from 10°C to 80°C, more preferably from 15°C to 70°C, more preferably from 18°C to 50°C, even more preferably from 18°C to 25°C, from the viewpoint of ease in controlling the temperature.

The raw material roasted coffee beans are preferably mixed with stirring after or while the water is added. This can saturate and moisten all the raw material roasted coffee beans with the water.

In the same manner as that of the first embodiment, heat treatment may be carried out under normal pressure, under elevated pressure, or under reduced pressure, and may be carried out in an open state or in a sealed state. The heat treatment is preferably carried out under elevated pressure out of the foregoing conditions from the viewpoint of thoroughly saturating the insides of the raw material roasted coffee beans with moisture. In addition, the heat treatment is preferably carried out in a sealed state because a condition of elevated pressure can be set easily.

A method for the heat treatment is not particularly limited. Examples thereof may include: a method involving placing the raw material roasted coffee beans in a container, adding the water thereto, sealing the container, and then heating the container at a predetermined temperature for a predetermined period of time; a method involving bringing the raw material roasted coffee beans into contact with steam, then placing the beans in a container, sealing the container, and heating the container at a predetermined temperature for a predetermined period of time; and a method involving bringing the raw material roasted coffee beans into contact with steam for a predetermined period of time.

The heating temperature is preferably 50°C or more, more preferably 60°C or more, more preferably 70°C or more, even more preferably 80°C or more, from the viewpoints of a reduction in amount of the hydroxyhydroquinone and production efficiency. In addition, the heating temperature is preferably 150°C or less, more preferably 140°C or less, more preferably 130°C or less, even more preferably 120°C or less, from the viewpoint of a balance of taste and flavor. The heating temperature ranges preferably from 50°C to 150°C, more preferably from 60°C to 140°C, more preferably from 70°C to 130°C, even more preferably from 80°C to 120°C.

The heating time is preferably 0.1 minute or more, more preferably 0.2 minute or more, more preferably 0.5 minute or more, more preferably 1 minute or more, more preferably 0.1 hour or more, more preferably 0.2 hour or more, more preferably 0.5 hour or more, even more preferably 1 hour or more, from the viewpoint of sufficiently maintaining the moist state of the raw material roasted coffee beans and from the viewpoint of reducing the amount of the hydroxyhydroquinone. In addition, the heating time is preferably 10 hours or less, more preferably 8 hours or less, more preferably 6 hours or less, more preferably 4 hours or less, even more preferably 3 hours or less, from the viewpoint of a balance of taste and flavor. The heating time ranges preferably from 0.1 minute to 10 hours, more preferably from 0.2 minute to 10 hours, more preferably from 0.5 minute to 8 hours, more preferably from 1 minute to 8 hours, more preferably from 0.1 hour to 6 hours, more preferably from 0.2 hour to 6 hours, more preferably from 0.5 hour to 4 hours, even more preferably from 1 hour to 3 hours. When a device controlled to a predetermined temperature in advance is used, the term "heating time" as used herein refers to a time elapsed after the raw material roasted coffee beans are placed in the device. In addition, when the temperature is set after the raw material roasted coffee beans are placed in a device, the term refers to a time elapsed after the temperature reaches a predetermined temperature. A device, such as a thermostatic chamber, a drying machine, or an autoclave, may be appropriately selected as a device for heating depending on heat treatment conditions.

The heating time maybe appropriately selected depending on the heating temperature. For example, when the heating temperature is from 100°C to 120°C, the heating time is preferably from 0.2 hour to 4 hours, more preferably from 0.5 hour to 3 hours.

After the first step, the unground roasted coffee beans may be taken out from a device and cooled, or may be subjected to a subsequent step without cooling.

(Second Step)

The second step is a step of subjecting the unground rawmaterial roasted coffee beans after the first step to supercritical carbon dioxide extraction. This makes it possible to remove caffeine and impurity due to a roast, such as 5-hydroxymethylfurfural, from the raw material roasted coffee beans.

The same conditions as those in the first embodiment may be adopted as the pressure condition in the supercritical carbon dioxide extraction, the extraction ratio (carbon dioxide (in terms of volume of gas at normal temperature and normal pressure)/raw material roasted coffee beans), and the flow rate (in terms of volume of gas at normal temperature and normal pressure) of carbon dioxide at the time of contact with the raw material roasted coffee beans. Specific conditions are as described in the first embodiment.

In addition, the extraction temperature is preferably 50°C or more, more preferably 60°C or more, more preferably 75°C or more, more preferably 85°C or more, even more preferably 90°C or more, and is preferably 150°C or less, more preferably 145°C or less, more preferably 140°C or less, more preferably 135°C or less, even more preferably 130°C or less, from the viewpoints of suppressing coarseness and improving an aftertaste. The extraction temperature ranges preferably from 50°C to 150°C, more preferably from 60°C to 145°C, more preferably from 75°C to 140°C, more preferably from 85°C to 135°C, even more preferably from 90°C to 130°C.

The extraction time is preferably 0.5 hour or more, more preferably 2 hours or more, more preferably 4 hours or more, more preferably 7 hours or more, even more preferably 9 hours or more, and is preferably 20 hours or less, more preferably 18 hours or less, more preferably 16 hours or less, even more preferably 14 hours or less, from the viewpoints of suppressing coarseness and improving an aftertaste. The extraction time ranges preferably from 0.5 hour to 20 hours, more preferably from 2 hours to 18 hours, more preferably from 4 hours to 16 hours, more preferably from 7 hours to 16 hours, even more preferably from 9 hours, to 14 hours.

In addition, in this step, the supercritical carbon dioxide extraction is preferably carried out in the presence of an entrainer. Here, it is known that, when a second medium for extraction is added to supercritical carbon dioxide, the solubility for a specific solute varies remarkably. The phenomenon is referred to as "entrainer effect," and the second medium for extraction is referred to as "entrainer."

The entrainer is, for example, water, such as tap water, distilled water, ion-exchange water, or natural water.

A method of performing the supercritical carbon dioxide extraction in the presence of the entrainer is not particularly limited as long as the method is performed using, as an extraction medium, a mixed medium of the entrainer and the supercritical carbon dioxide. The method is, for example, a method involving causing the supercritical carbon dioxide to pass through a filling tank filled with the entrainer, and supplying a mixed medium of the entrainer and the supercritical carbon dioxide to an extraction tank to perform extraction.

In each of the first embodiment and the second embodiment, after the second step, the roasted coffee beans may be dried. As a drying method, there may be given, for example, a method involving drying the roasted coffee beans using a blast fan, a method involving drying the roasted coffee beans under reduced pressure, and a method involving freeze-drying the roasted coffee beans.

The degrees of roasting of the roasted coffee beans obtained in the first embodiment and the second embodiment are preferably substantially the same as the degree of roasting of the raw material roasted coffee beans. The phrase "substantially the same as the degree of roasting of the raw material roasted coffee beans" means that the L value of the roasted coffee beans is the same as that of the raw material roasted coffee beans or that the difference in L value therebetween falls within the range of ±1.

[Roasted Coffee Beans]

Examples of the bean species of the roasted coffee beans of the present invention include arabica, robusta, liberica, and arabusta. In addition, the producing region of the coffee beans is not particularly limited, and examples thereof may include Brazil, Colombia, Tanzania, Mocha, Kilimanjaro, Mandheling, Blue Mountain, Guatemala, Vietnam, and Indonesia.

The L value of the roasted coffee beans of the present invention is from 15 to 45, and is preferably 15.5 or more, more preferably 16 or more, more preferably 16.5 or more, even more preferably 17 or more, from the viewpoint of suppressing coarseness. In addition, the L value is preferably 43 or less, more preferably 40 or less, even more preferably 35 or less, from the viewpoint of improving an aftertaste. The L value ranges preferably from 15.5 to 43, more preferably from 16 to 40, more preferably from 16.5 to 35, even more preferably from 17 to 35. The term "L value" as used herein refers to a value as determined by measuring the lightness of roasted coffee beans with a color-difference meter under the assumption that black has an L value of 0 and white has an L value of 100. For example, a spectrophotometer SE2000 (manufactured by Nippon Denshoku Industries Co., Ltd.) may be used as the color-difference meter.

The roasted coffee beans of the present invention may be used singly or as a mixture of two or more thereof. When a mixture of two or more of the roasted coffee beans is used, not only coffee beans different in bean species or producing region but also coffee beans different in degree of roasting can be combined. When a mixture of coffee beans different in degree of roasting is used, coffee beans having L values outside the above-mentioned range may be used, but coffee beans are appropriately combined so that the average of L values may fall within the above-mentioned range, and the contents of the chlorogenic acid (A), hydroxyhydroquinone (B), 5-hydroxymethylfurfural (C), and caffeine (D) may fall within ranges to be described later. The average of L values is determined as a sum of values each determined by multiplying an L value of roasted coffee beans to be used by a content mass ratio of the roasted coffee beans.

In the roasted coffee beans of the present invention, the content of the chlorogenic acid (A) per kg of the roasted coffee beans is from 6.0 g to 90.0 g, and is preferably 6.5 g or more, more preferably 7.0 g or more, even more preferably 7.3 g or more, from the viewpoint of a physiological effect. In addition, the content of the chlorogenic acid (A) is preferably 85.0 g or less, more preferably 80.0 g or less, even more preferably 75.0 g or less, from the viewpoint of a balance of taste and flavor. The content of the chlorogenic acid (A) per kg of the roasted coffee beans ranges preferably from 6.5 g to 90.0 g, more preferably from 7.0 g to 85.0 g, even more preferably from 7.3 g to 75.0 g. The term "chlorogenic acid" as used herein is a general term collectively encompassing: monocaffeoylquinic acids including 3-caffeoylquinic acid, 4-caffeoylquinic acid, and 5-caffeoylquinic acid; monoferuloylquinic acids including 3-feruloylquinic acid, 4-feruloylquinic acid, and 5-feruloylquinic acid; and dicaffeoylquinic acids including 3,4-dicaffeoylquinic acid, 3,5-dicaffeoylquinic acid, and 4, 5-dicaffeoylquinic acid. In the present invention, at least one out of the nine of chlorogenic acids only needs to be incorporated. However, it is preferred that all of the nine of chlorogenic acids be incorporated. The amount of the chlorogenic acid is defined based on the total amount of the nine of chlorogenic acids.

In the roasted coffee beans of the present invention, the content of the hydroxyhydroquinone (B) per kg of the roasted coffee beans is 50 mg or less, and is preferably 40 mg or less, more preferably 30 mg or less, more preferably 20 mg or less, even more preferably 10 mg or less, from the viewpoints of a physiological effect and the suppression of coarseness. The lower limit of the content of the hydroxyhydroquinone (B) per kg of the roasted coffee beans is not particularly limited and may be 0 mg, and is preferably 0.001 mg or more, more preferably 0.01 mg or more, from the viewpoint of production efficiency. The content of hydroxyhydroquinone (B) per kg of the roasted coffee beans ranges preferably from 0.001 mg to 40 mg, more preferably from 0.001 mg to 30 mg, more preferably from 0.001 mg to 20 mg, more preferably from 0.001 mg to 10 mg, even more preferably from 0.01 mg to 10 mg. The phrase "the content of the hydroxyhydroquinone (B) is 0 mg" as used herein refers to a concept including the case where the content of the hydroxyhydroquinone (B) is below a detection limit in "Analysis of Hydroxyhydroquinone" described in Examples below.

In the roasted coffee beans of the present invention, the content of the 5-hydroxymethylfurfural (C) per kg of the roasted coffee beans is 70 mg or less, and is preferably 65 mg or less, more preferably 60 mg or less, more preferably 55 mg or less, even more preferably 50 mg or less, from the viewpoint of suppressing coarseness. The lower limit of the content of the 5-hydroxymethylfurfural (C) per kg of the roasted coffee beans is not particularly limited and may be 0 mg, and is preferably 0.01 mg or more, more preferably 0.1 mg or more, from the viewpoint of production efficiency. The content of the 5-hydroxymethylfurfural (C) per kg of the roasted coffee beans ranges preferably from 0.01 mg to 65 mg, more preferably from 0.01 mg to 60 mg, more preferably from 0.01 mg to 55 mg, more preferably from 0.01 mg to 50 mg, even more preferably from 0.1 mg to 50 mg. The phrase "the content of the 5-hydroxymethylfurfural (C) is 0 mg" as used herein refers to a concept including the case where the content of the 5-hydroxymethylfurfural (C) is below a detection limit in "Analysis of 5-hydroxymethylfurfural" described in Examples below.

In the roasted coffee beans of the present invention, the mass ratio of the 5-hydroxymethylfurfural (C) to the chlorogenic acid (A), [(C) / (A)], in the roasted coffee beans is preferably 0.006 or less, more preferably 0.005 or less, more preferably 0.0037 or less, even more preferably 0.0015 or less, from the viewpoints of suppressing coarseness and improving an aftertaste. The lower limit of the mass ratio [(C)/(A)] is not particularly limited and may be 0, and is preferably 0.00001 or more, more preferably 0.0001 or more, from the viewpoint of production efficiency. The mass ratio [(C) / (A)] ranges preferably from 0.00001 to 0.006, more preferably from 0.00001 to 0.005, more preferably from 0.00001 to 0.0037, more preferably from 0.00001 to 0.0015, even more preferably from 0. 0001 to 0.0015.

In the roasted coffee beans of the present invention, the content of the caffeine (D) per kg of the roasted coffee beans is 9.0 g or less, and is preferably 7.0 g or less, more preferably 5.0 g or less, more preferably 4.0 g or less, even more preferably 3.0 g or less, from the viewpoints of suppressing coarseness and improving an aftertaste, and is preferably 0.05 g or more, more preferably 0.1 g or more, more preferably 0.15 g or more, even more preferably 0.2 g or more, from the viewpoint of imparting adequate bitterness. The content of the caffeine (D) per kg of the roasted coffee beans ranges preferably from 0.05 g to 7.0 g, more preferably from 0.1 g to 5.0 g, more preferably from 0.15 g to 4.0 g, even more preferably from 0.2 g to 3.0 g.

In this description, the contents of the chlorogenic acid (A), the hydroxyhydroquinone (B), the 5-hydroxymethylfurfural (C), and the caffeine (D) in the roasted coffee beans are values determined by the following expressions (i) to (iv) based on the contents of the chlorogenic acid (A), the hydroxyhydroquinone (B), the 5-hydroxymethylfurfural (C), and the caffeine (D) in a coffee extract solution obtained from the roasted coffee beans through extraction under conditions to be described later.

(i) Content [g/kg] of chlorogenic acid in roasted coffee beans= [Content (g/kg) of chlorogenic acid in coffee extract solution] × [Mass (g) of coffee extract solution] / [Mass (g) of roasted coffee beans]

(ii) Content (mg/kg) of hydroxyhydroquinone in roasted coffee beans= [Content (mg/kg) of hydroxyhydroquinone in coffee extract solution] × [Mass (g) of coffee extract solution] / [Mass (g) of roasted coffee beans]

(iii) Content (mg/kg) of 5-hydroxymethylfurfural in roasted coffee beans= [Content (mg/kg) of 5-hydroxymethylfurfural in coffee extract solution] × [Mass (g) of coffee extract solution] / [Mass (g) of roasted coffee beans]

(iv) Content (g/kg) of caffeine in roasted coffee beans= [Content (g/kg) of caffeine in coffee extract solution] × [Mass (g) of coffee extract solution] / [Mass (g) of roasted coffee beans]

Conditions of an analysis for a coffee extract solution are as described below. 80 g of water for extraction (a solution obtained by dissolving 1 g of phosphoric acid and 0.03 g of 1-hydroxyethane-1, 1-diphosphonic acid (HEDPO) in 1L of ion-exchange water) was added to 0.5 g of ground roasted coffee beans having an average particle size of 0.030 mm, and the extraction was performed by immersing for 10 minutes while maintaining the temperature of the mixture at from 95°C to 99°C. Next, the supernatant of the coffee extract solution was collected and subjected to methods described in Examples below. Thus, the contents of the chlorogenic acid (A), the hydroxyhydroquinone (B), the 5-hydroxymethylfurfural (C), and the caffeine (D) were analyzed.

The water content of the roasted coffee beans of the present invention is preferably 30 mass% or less, more preferably 20 mass% or less, more preferably 10 mass% or less, even more preferably 5 mass% or less. The water content can be measured by an ambient-pressure heat drying method, and specifically, can be determined by a method involving weighing about 1 g of a sample, subjecting the sample to heat treatment at 105°C for 6 hours, weighing the sample after the heat treatment, and calculating the water content from the masses of the sample before and after the heat treatment. Specifically, the water content can be calculated by using the following expression.

$$\texttt{Water content (mass\%) = ([Mass (g) of roasted coffee beans}$$

$$\texttt{before heat treatment] - [Mass (g) of roasted coffee beans after heat}$$

$$\texttt{treatment]) / [Mass (g) of roasted coffee beans before heat}$$

$$\texttt{treatment]} \times \texttt{100}$$

The roasted coffee beans of the present invention may be unground or ground ones. For example, the average particle size of ground roasted coffee beans produced in the first embodiment of the present invention is preferably 5 mm or less, more preferably 2.5 mm or less, even more preferably 1.5 mm or less, from the viewpoint of reducing the amount of the hydroxyhydroquinone. In addition, the average particle size of the ground roasted coffee beans is preferably 0.001 mm or more, more preferably 0.01 mm or more, even more preferably 0.05 mm or more, from the viewpoint of production efficiency. The average particle size ranges preferably from 0.001 mm to 5 mm, more preferably from 0.01 mm to 2.5 mm, even more preferably from 0.05 mm to 1.5 mm. The term "average particle size" as used herein refers to a particle size corresponding to 50% ($d_{50}$) in a cumulative particle size distribution curve on a volume basis measured using a laser diffraction/scattering method particle size distribution measuring apparatus. The coffee beans may be classified using a Tyler standard sieve, an ASTM standard sieve, a JIS standard sieve, or the like so that the average particle size may fall within the above-mentioned range. In addition, even when a desired average particle size is outside the measuring range of the laser diffraction/scattering method particle size distribution measuring apparatus, the coffee beans can be classified using the above-mentioned sieve.

The roasted coffee beans of the present invention may be produced by an appropriate method, and examples thereof may include the production methods described above.

[Coffee beverage]

The content of the chlorogenic acid (A) in the coffee beverage of the present invention is from 0.01 mass% to 0.45 mass%, and is preferably 0.02 mass% or more, more preferably 0.025 mass% or more, even more preferably 0.03 mass% or more, from the viewpoint of a physiological effect. In addition, the content of the chlorogenic acid (A) is preferably 0.42 mass% or less, more preferably 0.38 mass% or less, even more preferably 0.35 mass% or less, from the viewpoint of a balance of taste and flavor. The content of the chlorogenic acid (A) in the coffee beverage ranges preferably from 0.02 mass% to 0.42 mass%, more preferably from 0.025 mass% to 0.38 mass%, even more preferably from 0.03 mass% to 0.35 mass%.

The content of the hydroxyhydroquinone (B) in the coffee beverage of the present invention is 2 ppm by mass, and is preferably 1.5 ppm by mass or less, more preferably 1 ppm by mass or less, more preferably 0.7 ppm by mass or less, even more preferably 0.5 ppm by mass or less, from the viewpoints of a physiological effect and the suppression of coarseness. The lower limit of the content of the hydroxyhydroquinone (B) in the coffee beverage is not particularly limited and may be 0 ppm by mass, and is preferably 0.001 ppm by mass or more, more preferably 0.01 ppm by mass or more, from the viewpoint of production efficiency. The content of hydroxyhydroquinone (B) in the coffee beverage ranges preferably from 0.001 ppm by mass to 2 ppm by mass, more preferably from 0.001 ppm by mass to 1.5 ppm by mass, more preferably from 0.001 ppm by mass to 1 ppm by mass, more preferably from 0.001 ppm by mass to 0.7 ppm by mass, even more preferably from 0.01 ppm by mass to 0.5 ppm by mass. The phrase "the content of the hydroxyhydroquinone (B) is 0 ppm by mass" as used herein refers to a concept including the case where the content of the hydroxyhydroquinone (B) is below a detection limit in "Analysis of Hydroxyhydroquinone" described in Examples below.

In the coffee beverage of the present invention, the mass ratio [(B)/(A)] of the hydroxyhydroquinone (B) to the chlorogenic acid (A) in the coffee beverage is preferably 0.0025 or less, more preferably 0.002 or less, more preferably 0.0015 or less, more preferably 0.001 or less, even more preferably 0.0005 or less, from the viewpoints of a physiological effect and the suppression of coarseness. The lower limit of the mass ratio [(B) / (A)] is not particularly limited and may be 0, and is preferably 0.00001 or more, more preferably 0.0001 or more, from the viewpoint of production efficiency. The mass ratio [(C)/(A)] ranges preferably from 0.00001 to 0.0025, more preferably from 0.00001 to 0.002, more preferably from 0.00001 to 0.0015, more preferably from 0.00001 to 0.001, even more preferably from 0.0001 to 0.0005.

The content of the 5-hydroxymethylfurfural (C) in the coffee beverage of the present invention is 3 ppm by mass or less, and is preferably 2.5 ppm by mass or less, more preferably 2 ppm by mass or less, even more preferably 1.5 ppm by mass or less, from the viewpoint of suppressing coarseness. The lower limit of the content of the 5-hydroxymethylfurfural (C) in the coffee beverage is not particularly limited and may be 0 ppm by mass, and is preferably 0.01 ppm by mass or more, more preferably 0.1 ppm by mass or more, from the viewpoint of production efficiency. The content of the 5-hydroxymethylfurfural (C) in the coffee beverage ranges preferably from 0.01 ppm by mass to 3 ppm by mass, more preferably from 0.01 ppm by mass to 2.5 ppm by mass, more preferably from 0.01 ppm by mass to 2 ppm by mass, even more preferably from 0.1 ppm by mass to 1.5 ppm by mass. The phrase "the content of the 5-hydroxymethylfurfural (C) is 0 mg" as used herein refers to a concept including the case where the content of the 5-hydroxymethylfurfural (C) is below a detection limit in "Analysis of 5-hydroxymethylfurfural" described in Examples below.

In the coffee beverage of the present invention, the mass ratio of the 5-hydroxymethylfurfural (C) to the chlorogenic acid (A), [(C)/(A)], in the coffee beverage is preferably 0.0055 or less, more preferably 0.005 or less, more preferably 0.0035 or less, more preferably 0.0015 or less, even more preferably 0.0012 or less, from the viewpoints of suppressing coarseness and improving an aftertaste. The lower limit of the mass ratio [(C)/(A)] is not particularly limited and may be 0, and is preferably 0.00001 or more, more preferably 0.0001 or more, from the viewpoint of production efficiency. The mass ratio [(C) / (A)] ranges preferably from 0.00001 to 0.0055, more preferably from 0.00001 to 0.005, more preferably from 0.00001 to 0.0035, more preferably from 0.00001 to 0.0015, even more preferably from 0.0001 to 0.0012.

The content of the caffeine (D) in the coffee beverage of the present invention is 0.04 mass% or less, and is preferably 0.03 mass% or less, more preferably 0.025 mass% or less, more preferably 0.02 mass% or less, even more preferably 0.01 mass% or less, from the viewpoints of suppressing coarseness and improving an aftertaste. In addition, the content of the caffeine (D) is preferably 0.001 mass% or more, more preferably 0.003 mass% or more, even more preferably 0.005 mass% or more, from the viewpoint of imparting adequate bitterness. The content of the caffeine (D) in the coffee beverage ranges preferably from 0.001 mass% to 0.04 mass%, more preferably from 0.001 mass% to 0.03 mass%, more preferably from 0.003 mass% to 0.025 mass%, even more preferably from 0.005 mass% to 0.01 mass%.

In the coffee beverage of the present invention, the mass ratio of the caffeine (D) to the chlorogenic acid (A), [(D) / (A)], in the coffee beverage is preferably 0.5 or less, more preferably 0.4 or less, more preferably 0.2 or less, more preferably 0.15 or less, even more preferably 0.1 or less, from the viewpoints of suppressing coarseness and improving an aftertaste. In addition, the mass ratio [(D) / (A)] is preferably 0.02 or more, more preferably 0.025 or more, even more preferably 0.03 or more, from the viewpoint of imparting adequate bitterness. The mass ratio [(D) / (A)] ranges preferably from 0.02 to 0.5, more preferably from 0.02 to 0.4, more preferably from 0.025 to 0.2, more preferably from 0.025 to 0.15, even more preferably from 0.03 to 0.1.

The pH (20°C) of the coffee beverage of the present invention is preferably 4.5 or more, more preferably 4.8 or more, even more preferably 5 or more, and is preferably 7 or less, more preferably 6.5 or less, even more preferably 6 or less, from the viewpoint of a balance of taste and flavor. The pH (20°C) ranges preferably from 4.5 to 7, more preferably from 4.8 to 6.5, even more preferably from 5 to 6.

The Brix (20°C) of the coffee beverage of the present invention is preferably 0.8 or more, more preferably 1.0 or more, even more preferably 1.2 or more, from the viewpoint of imparting richness. In addition, the Brix (20°C) is preferably 3.0 or less, more preferably 2.5 or less, even more preferably 2.3 or less, from the viewpoint of good texture. The Brix ranges preferably from 0.8 to 3.0, more preferably from 1.0 to 2.5, even more preferably from 1.2 to 2.3.

The coffee beverage of the present invention can be produced using, for example, a coffee extract solution extracted from the roasted coffee beans of the present invention, but a material for the coffee beverage is not limited thereto. A coffee extract solution obtained by subjecting a coffee extract solution extracted from roasted coffee beans except the roasted coffee beans of the present invention to fractionation or the like to reduce the contents of the hydroxyhydroquinone (B), the 5-hydroxymethylfurfural (C), and the caffeine (D) may be used. In addition, there may be used a mixture obtained by mixing two or more of coffee extract solutions so that the contents of the chlorogenic acid (A), the hydroxyhydroquinone (B), the 5-hydroxymethylfurfural (C), and the caffeine (D) may fall within the above-mentioned ranges.

When the coffee beverage of the present invention is produced, the usage of roasted coffee beans per 100 g of the coffee beverage is 1 g or more, more preferably 2.5 g or more, even more preferably 4.5 g or more in terms of raw beans. The upper limit of the usage of roasted coffee beans per 100 g of the coffee beverage can be appropriately selected depending on preference, and is preferably 20 g or less, more preferably 15 g or less, even more preferably 10 g or less in terms of raw beans, from the viewpoint of a balance of taste and flavor. Here, the value in terms of raw beans is defined under the assumption that 1 g of roasted coffee beans correspond to 1.3 g of green coffee beans (Soft Drinks, newly revised edition, edited by Japan Soft Drink Association, published by Korin, published on Dec. 25, 1989, described in p. 421).

In addition, as desired, the coffee beverage of the present invention may contain one or two or more of additives, such as a sweetener, a milk component, an antioxidant, a flavor, an organic acid, an organic acid salt, an inorganic acid, an inorganic acid salt, an inorganic salt, a dye, an emulsifier, a preservative, a seasoning, an acidulant, an amino acid, a pH regulator, and a quality stabilizer. The coffee beverage of the present invention may be a black coffee beverage or a milk coffee beverage.

The coffee beverage of the present invention may be provided as a packaged coffee beverage by being filled in a general packaging container, such as a molded container mainly formed of polyethylene terephthalate (so-called PET bottle), a metal can, a paper container composited with a metal foil or a plastic film, or a bottle.

In addition, the coffee beverage of the present invention may be a heat-sterilized coffee beverage. A method for heat sterilization is not particularly limited as long as the heat sterilization is one that complies with a condition specified by an applicable regulation (Food Sanitation Act in Japan) . Examples of the method may include a retort sterilization method, a high-temperature short-time sterilization method (HTST method), and an ultrahigh-temperature sterilization method (UHT method). In addition, the method for the heat sterilization may be appropriately selected depending on the kind of the container. A method of deciding the method for the heat sterilization in accordance with the kind of a container is as follows: for example, when a container filled with a drink can be subjected to heat sterilization as it is, like a metal can, retort sterilization may be adopted. In addition, when a container that cannot be subjected to the retort sterilization, such as a PET bottle or a paper container, is used, there may be adopted, for example, aseptic filling, which involves subjecting a drink to heat sterilization in advance under the same sterilization conditions as above and filling the drink into a container having been subjected to sterilization treatment in an aseptic environment, or hot-pack filling.

The present invention further discloses the following production method, roasted coffee beans, and coffee beverage regarding the embodiments described above.

<1>

A method of producing roasted coffee beans, comprising:

a first step of adding water to raw material roasted coffee beans, wherein the amount of the water is from 5 mass% to 110 mass% with respect to that of the raw material roasted coffee beans, followed by heating of the resultant; and a second step of subjecting the raw material roasted coffee beans after the first step to supercritical carbon dioxide extraction.

<1-1>

A method of producing roasted coffee beans, comprising:

a first step of adding water to raw material roasted coffee beans, wherein the amount of the water is from 5 mass% to 110 mass% with respect to that of the raw material roasted coffee beans, followed by heating of the resultant for 0.3 hour to 10 hours; and

a second step of subjecting the raw material roasted coffee beans after the first step to supercritical carbon dioxide extraction.

<1-2>

The method of producing roasted coffee beans according to the above-mentioned item <1> or <1-1>, wherein the bean species of the raw material roasted coffee beans is preferably one or two or more selected from the group consisting of the group consisting of arabica, robusta, liberica, and arabusta, and the producing region of the raw material roasted coffee beans is preferably one or two or more selected from the group consisting of Brazil, Colombia, Tanzania, Mocha, Kilimanjaro, Mandheling, Blue Mountain, Guatemala, Vietnam, and Indonesia.

<1-3>

The method of producing roasted coffee beans according to any one of the above-mentioned items <1>, <1-1>, and <1-2>, wherein the raw material roasted coffee beans preferably comprise a product obtained by roasting green coffee beans.

<1-4>

The method of producing roasted coffee beans according to any one of the above-mentioned items <1> and <1-1> to <1-3>, wherein the raw material roasted coffee beans have an L value of preferably 15 or more, more preferably 15.5 or more, more preferably 16 or more, more preferably 16.5 or more, even more preferably 17 or more, and of preferably 45 or less, more preferably 43 or less, more preferably 40 or less, even more preferably 35 or less.

<1-5>

The method of producing roasted coffee beans according to any one of the above-mentioned items <1> and <1-1> to <1-4>, wherein the raw material roasted coffee beans have an L value of preferably from 15 to 45, more preferably from 15.5 to 43, more preferably from 16 to 40, more preferably from 16.5 to 35, even more preferably from 17 to 35.

<1-6>

The method of producing roasted coffee beans according to any one of the above-mentioned items <1> and <1-1> to <1-5>, wherein the raw material roasted coffee beans preferably comprise one of coffee beans or a mixture of coffee beans different in one or more of degree of roasting, bean species, producing region, and L value.

<1-7>

The method of producing roasted coffee beans according to any one of the above-mentioned items <1> and <1-1> to <1-6>, wherein the raw material roasted coffee beans preferably comprise ground roasted coffee beans.

<1-8>

The method of producing roasted coffee beans according to the above-mentioned item <1-7>, wherein the ground raw material roasted coffee beans have an average particle size of preferably 5 mm or less, more preferably 2.5 mm or less, even more preferably 1.5 mm or less, and of preferably 0.001 mm or more, more preferably 0.01 mm or more, even more preferably 0.05 mm or more.

<1-9>

The method of producing roasted coffee beans according to the above-mentioned item <1-7> or <1-8>, wherein the ground raw material roasted coffee beans have an average particle size of preferably from 0.001 mm to 5 mm, more preferably from 0.01 mm to 2.5 mm, even more preferably from 0.05 mm to 1.5 mm.

<1-10>

The method of producing roasted coffee beans according to any one of the above-mentioned items <1> and <1-1> to <1-9>, wherein the water to be added preferably comprises one or two or more selected from the group consisting of the group consisting of tap water, distilled water, ion-exchange water, and natural water.

<1-11>

The method of producing roasted coffee beans according to any one of the above-mentioned items <1> and <1-1> to <1-10>, wherein the temperature of the water to be added is preferably substantially the same as a temperature at which the state is maintained, more preferably from 10°C to 80°C, more preferably from 15°C to 70°C, more preferably from 18°C to 50°C, even more preferably from 18°C to 25°C.

<1-12>

The method of producing roasted coffee beans according to any one of the above-mentioned items <1> and <1-1> to <1-11>, wherein the water is added preferably under normal pressure, under reduced pressure, or under elevated pressure, more preferably under normal pressure.

<1-13>

The method of producing roasted coffee beans according to any one of the above-mentioned items <1> and <1-1> to <1-12>, wherein the temperature of the roasted coffee beans at the time of the addition of the water is preferably from 10°C to 80°C, more preferably from 15°C to 70°C, more preferably from 15°C to 30°C, even more preferably from 18°C to 25°C.

<1-14>

The method of producing roasted coffee beans according to any one of the above-mentioned items <1> and <1-1> to <1-13>, wherein the amount of the water added is preferably 10 mass% or more, more preferably 20 mass% or more, even more preferably 30 mass% or more, and is preferably preferably 105 mass% or less, even more preferably 100 mass% or less, with respect to that of the raw material roasted coffee beans.

<1-15>

The method of producing roasted coffee beans according to any one of the above-mentioned items <1> and <1-1> to <1-14>, wherein the amount of the water added is preferably preferably from 10 mass% to 110 mass%, more preferably from 20 mass% to 105 mass%, even more preferably from 30 mass% to 100 mass%, with respect to that of the raw material roasted coffee beans.

<1-16>

The method of producing roasted coffee beans according to any one of the above-mentioned items <1> and <1-1> to <1-15>, wherein the temperature of an atmosphere at the time of the addition of the water is preferably from 10°C to 80°C, more preferably from 15°C to 70°C, more preferably from 18°C to 50°C, even more preferably from 18°C to 25°C.

<1-17>

The method of producing roasted coffee beans according to any one of the above-mentioned items <1> and <1-1> to <1-16>, wherein the heating temperature according to the first step is preferably 20°C or more, more preferably 25°C or more, more preferably 30°C or more, even more preferably 35°C or more, and is preferably 80°C or less, more preferably 70°C or less, more preferably 60°C or less, even more preferably 50°C or less.

<1-18>

The method of producing roasted coffee beans according to any one of the above-mentioned items <1> and <1-1> to <1-17>, wherein the heating temperature according to the first step is preferably from 20°C to 80°C, more preferably from 25°C to 70°C, more preferably from 30°C to 60°C, even more preferably from 35°C to 50°C.

<1-19>

The method of producing roasted coffee beans according to any one of the above-mentioned items <1> and <1-1> to <1-18>, wherein the heating time according to the first step is preferably 0.5 hour or more, more preferably 1 hour or more, more preferably 2 hours or more, even more preferably 3 hours or more, and is preferably 9 hours or less, more preferably 8 hours or less, even more preferably 7 hours or less.

<1-20>

The method of producing roasted coffee beans according to any one of the above-mentioned items <1> and <1-1> to <1-19>, wherein the heating time according to the first step is preferably from 0.5 hour to 9 hours, more preferably from 1 hour to 8 hours, more preferably from 2 hours to 7 hours, even more preferably from 3 hours to 7 hours.

<1-21>

The method of producing roasted coffee beans according to any one of the above-mentioned items <1> and <1-1> to <1-20>, wherein, when the heating temperature according to the first step is from 20°C to 40°C, the heating time is preferably from 4 hours to 12 hours, more preferably from 6 hours to 10 hours, even more preferably from 6 hours to 8 hours, and when the heating temperature according to the first step is more than 40°C and 60°C or less, the heating time is preferably from 3 hours to 9 hours, more preferably from 4 hours to 8 hours, even more preferably from 5 hours to 7 hours.

<1-22>

The method of producing roasted coffee beans according to any one of the above-mentioned items <1> and <1-1> to <1-21>, wherein the heat treatment according to the first step is carried out preferably in a sealed state.

<1-23>

The method of producing roasted coffee beans according to any one of the above-mentioned items <1> and <1-1> to <1-22>, wherein the supercritical carbon dioxide extraction is carried out under a pressure condition of preferably 8 MPa or more, more preferably 12 MPa or more, more preferably 20 MPa or more, and of preferably 50 MPa or less, more preferably 40 MPa or less, even more preferably 35 MPa or less.

<1-24>

The method of producing roasted coffee beans according to any one of the above-mentioned items <1> and <1-1> to <1-23>, wherein the supercritical carbon dioxide extraction is carried out under a pressure condition of preferably from 8 MPa to 50 MPa, more preferably from 12 MPa to 40 MPa, even more preferably from 20 MPa to 35 MPa.

<1-25>

The method of producing roasted coffee beans according to any one of the above-mentioned items <1> and <1-1> to <1-24>, wherein the extraction temperature according to the second step is preferably 35°C or more, more preferably 40°C or more, even more preferably 50°C or more, and is preferably 100°C or less, more preferably 90°C or less, even more preferably 80°C or less.

<1-26>

The method of producing roasted coffee beans according to any one of the above-mentioned items <1> and <1-1> to <1-25>, wherein the extraction temperature according to the second step is preferably from 35°C to 100°C, more preferably from 40°C to 90°C, even more preferably from 50°C to 80°C.

<1-27>

The method of producing roasted coffee beans according to any one of the above-mentioned items <1> and <1-1> to <1-26>, wherein the extraction time according to the second step is preferably 0.5 hour or more, more preferably 1 hour or more, more preferably 2 hours or more, even more preferably 3.5 hours or more, and is preferably 10 hours or less, more preferably 9 hours or less, even more preferably 8 hours or less.

<1-28>

The method of producing roasted coffee beans according to any one of the above-mentioned items <1> and <1-1> to <1-27>, wherein the extraction time according to the second step is preferably from 0.5 hour to 10 hours, more preferably from 1 hour to 9 hours, more preferably from 2 hours to 8 hours, even more preferably from 3.5 hours to 8 hours.

<1-29>

The method of producing roasted coffee beans according to any one of the above-mentioned items <1> and <1-1> to <1-28>, wherein the extraction ratio (supercritical carbon dioxide/raw material roasted coffee beans) according to the second step is preferably 10 (v/w) or more, more preferably 20 (v/w) or more, even more preferably 40 (v/w) or more, and is preferably 150 (v/w) or less, more preferably 120 (v/w) or less, even more preferably 100 (v/w) or less.

<1-30>

The method of producing roasted coffee beans according to any one of the above-mentioned items <1> and <1-1> to <1-29>, wherein the extraction ratio (supercritical carbon dioxide/raw material roasted coffee beans) according to the second step is preferably from 10 (v/w) to 150 (v/w), more preferably from 20 (v/w) to 120 (v/w), even more preferably from 40 (v/w) to 100 (v/w).

<1-31>

The method of producing roasted coffee beans according to any one of the above-mentioned items <1> and <1-1> to <1-30>, wherein the flow rate of supercritical carbon dioxide in the supercritical carbon dioxide extraction is preferably 1.00 L/hr or more, more preferably 2.00 L/hr or more, even more preferably 3.00 L/hr or more, and is preferably 6.00 L/hr or less, more preferably 5.00 L/hr or less, even more preferably 4.00 L/hr or less.

<1-32>

The method of producing roasted coffee beans according to any one of the above-mentioned items <1> and <1-1> to <1-31>, wherein the flow rate of supercritical carbon dioxide in the supercritical carbon dioxide extraction is preferably from 1. 00 L/hr to 6.00 L/hr, more preferably from 2.00 L/hr to 5.00 L/hr, even more preferably from 3.00 L/hr to 4.00 L/hr.

<1-33>

The method of producing roasted coffee beans according to any one of the above-mentioned items <1> and <1-1> to <1-28>, wherein the extraction ratio (carbon dioxide (in terms of volume of gas at normal temperature and normal pressure)/raw material roasted coffee beans) according to the second step is preferably 0.01 ($m^3$/g) or more, more preferably 0.02 ($m^3$/g) or more, more preferably 0.04 ($m^3$/g) or more, even more preferably 0.06 ($m^3$/g) or more, and is preferably 0.20 ($m^3$/g) or less, more preferably 0.16 ($m^3$/g) or less, even more preferably 0.12 ($m^3$/g) or less.

<1-34>

The method of producing roasted coffee beans according to any one of the above-mentioned items <1>, <1-1> to <1-28>, and <1-33>, wherein the extraction ratio (carbon dioxide (in terms of volume of gas at normal temperature and normal pressure)/raw material roasted coffee beans) according to the second step is preferably from 0.01 ($m^3$/g) to 0.20 ($m^3$/g), more preferably from 0.02 ($m^3$/g) to 0.16 ($m^3$/g), more preferably from 0.04 ($m^3$/g) to 0.12 ($m^3$/g), even more preferably from 0.06 ($m^3$/g) to 0.12 ($m^3$/g).

<1-35>

The method of producing roasted coffee beans according to any one of the above-mentioned items <1>, <1-1> to <1-28>, <1-33>, and <1-34>, wherein, in the second step, the flow rate (in terms of volume of gas at normal temperature and normal pressure) of carbon dioxide at the time of contact with the raw material roasted coffee beans is preferably 0.1 $m^3$/h or more, more preferably 0.3 $m^3$/h or more, more preferably 0.5 $m^3$/h or more, even more preferably 0.7 $m^3$/h or more, and is preferably 3 $m^3$/h or less, more preferably 2 $m^3$/h, even more preferably 1.5 $m^3$/h or less.

<1-36>

The method of producing roasted coffee beans according to any one of the above-mentioned items <1>, <1-1> to <1-28>, <1-33>, <1-34>, and <1-35>, wherein, in the second step, the flow rate (in terms of volume of gas at normal temperature and normal pressure) of carbon dioxide at the time of contact with the raw material roasted coffee beans is preferably from 0.1 $m^3$/h to 3 $m^3$/h, more preferably from 0.3 $m^3$/h to 2 $m^3$/h, more preferably from 0.5 $m^3$/h to 1.5 $m^3$/h, even more preferably from 0.7 $m^3$/h to 1.5 $m^3$/h.

<1-37>

The method of producing roasted coffee beans according to any one of the above-mentioned items <1> and <1-1> to <1-36>, wherein the roasted coffee beans have an L value of from 15 to 45 and comprise, per kg of the roasted coffee beans, 6.0 g to 90.0 g of a chlorogenic acid (A), 50 mg or less of hydroxyhydroquinone (B), 70 mg or less of 5-hydroxymethylfurfural (C), and 9.0 g or less of caffeine (D) .

<2-1>

Roasted coffee beans having an L value of from 15 to 45, which are obtained by the production method of anyone of the above-mentioned items <1> and <1-1> to <1-37>, the roasted coffee beans comprising, per kg of the roasted coffee beans, 6.0 g to 90.0 g of a chlorogenic acid (A), 50 mg or less of hydroxyhydroquinone (B), 70 mg or less of 5-hydroxymethylfurfural (C), and 9.0 g or less of caffeine (D) .

<3-1>

Roasted coffee beans having an L value of from 15 to 45, the roasted coffee beans comprising, per kg of the roasted coffee beans, 6.0 g to 90.0 g of a chlorogenic acid (A), 50 mg or less of hydroxyhydroquinone (B), 70 mg or less of 5-hydroxymethylfurfural (C), and 9.0 g or less of caffeine (D).

<3-2>

The method of producing roasted coffee beans according to the above-mentioned item <1-37>, or the roasted coffee beans according to the above-mentioned item <2-1> or <3-1>, wherein the bean species of the roasted coffee beans is preferably one or two or more selected from the group consisting of the group consisting of arabica, robusta, liberica, and arabusta, and the producing region of the roasted coffee beans is preferably one or two or more selected from the group consisting of the group consisting of Brazil, Colombia, Tanzania, Mocha, Kilimanjaro, Mandheling, Blue Mountain, Guatemala, Vietnam, and Indonesia ("the method of producing roasted coffee beans, or the roasted coffee beans" is hereinafter referred to as "roasted coffee beans or the like.")

<3-3>

The roasted coffee beans or the like according to any one of the above-mentioned items <1-37>, <2-1>, <3-1>, and <3-2>, wherein the roasted coffee beans have an L value of preferably 15.5 or more, more preferably 16 or more, more preferably 16.5 or more, even more preferably 17 or more, and of preferably 43 or less, more preferably 40 or less, even more preferably 35 or less.

<3-4>

The roasted coffee beans or the like according to any one of the above-mentioned items <1-37>, <2-1>, and <3-1> to <3-3>, wherein the roasted coffee beans have an L value of preferably from 15.5 to 43, more preferably from 16 to 40, more preferably from 16.5 to 35, even more preferably from 17 to 35.

<3-5>

The roasted coffee beans or the like according to any one of the above-mentioned items <1-37>, <2-1>, and <3-1> to <3-4>, wherein the roasted coffee beans preferably comprise one of coffee beans or a mixture of coffee beans different in one or more of degree of roasting, bean species, producing region, and L value.

<3-6>

The roasted coffee beans or the like according to any one of the above-mentioned items <1-37>, <2-1>, and <3-1> to <3-5>, wherein the content of the chlorogenic acid (A) per kg of the roasted coffee beans is preferably 6.5 g or more, more preferably 7.0 g or more, even more preferably 7.3 g or more, and is preferably 85.0 g or less, more preferably 80.0 g or less, even more preferably 75.0 g or less.

<3-7>

The roasted coffee beans or the like according to any one of the above-mentioned items <1-37>, <2-1>, and <3-1> to <3-6>, wherein the content of the chlorogenic acid (A) per kg of the roasted coffee beans is preferably from 6.5 g to 90.0 g, more preferably from 7.0 g to 85.0 g, even more preferably from 7.3 g to 75.0 g.

<3-8>

The roasted coffee beans or the like according to any one of the above-mentioned items <1-37>, <2-1>, and <3-1> to <3-7>, wherein the chlorogenic acid (A) comprises preferably one or two or more selected from the group consisting of the group consisting of 3-caffeoylquinic acid, 4-caffeoylquinic acid, 5-caffeoylquinic acid, 3-feruloylquinic acid, 4-feruloylquinic acid, 5-feruloylquinic acid, 3,4-dicaffeoylquinic acid, 3,5-dicaffeoylquinic acid, and 4,5-dicaffeoylquinic acid, more preferably all of the nine .

<3-9>

The roasted coffee beans or the like according to any one of the above-mentioned items <1-37>, <2-1>, and <3-1> to <3-8>, wherein the content of the hydroxyhydroquinone (B) per kg of the roasted coffee beans is preferably 40 mg or less, more preferably 30 mg or less, more preferably 20 mg or less, even more preferably 10 mg or less, and is preferably 0.001 mg or more, more preferably 0.01 mg or more.

<3-10>

The roasted coffee beans or the like according to any one of the above-mentioned items <1-37>, <2-1>, and <3-1> to <3-9>, wherein the content of the hydroxyhydroquinone (B) per kg of the roasted coffee beans is preferably from 0.001 mg to 40 mg, more preferably from 0.001 mg to 30 mg, more preferably from 0.001 mg to 20 mg, more preferably from 0.001 mg to 10 mg, even more preferably from 0.01 mg to 10 mg, and may be 0 mg.

<3-11>

The roasted coffee beans or the like according to any one of the above-mentioned items <1-37>, <2-1>, and <3-1> to <3-10>, wherein the content of the 5-hydroxymethylfurfural (C) per kg of the roasted coffee beans is preferably 65 mg or less, more preferably 60 mg or less, more preferably 55 mg or less, even more preferably 50 mg or less, and is preferably 0.01 mg or more, more preferably 0.1 mg or more.

<3-12>

The roasted coffee beans or the like according to any one of the above-mentioned items <1-37>, <2-1>, and <3-1> to <3-11>, wherein the content of the 5-hydroxymethylfurfural (C) per kg of the roasted coffee beans is preferably from 0.01 mg to 65 mg, more preferably from 0.01 mg to 60 mg, more preferably from 0.01 mg to 55 mg, more preferably from 0.01 mg to 50 mg, even more preferably from 0.1 mg to 50 mg, and may be 0 mg.

<3-13>

The roasted coffee beans or the like according to any one of the above-mentioned items <1-37>, <2-1>, and <3-1> to<3-12>, wherein the mass ratio of the 5-hydroxymethylfurfural (C) to the chlorogenic acid (A), [(C)/(A)], in the roasted coffee beans is preferably 0.006 or less, more preferably 0.005 or less, more preferably 0.0037 or less, even more preferably 0.0015 or less, and is preferably 0. 00001 or more, more preferably 0.0001 or more.

<3-14>

The roasted coffee beans or the like according to any one of the above-mentioned items <1-37>, <2-1>, and <3-1> to <3-13>, wherein the mass ratio of the 5-hydroxymethylfurfural (C) to the chlorogenic acid (A), [(C)/(A)], in the roasted coffee beans is preferably from 0.00001 to 0.006, more preferably from 0.00001 to 0.005, more preferably from 0.00001 to 0.0037, more preferably from 0.00001 to 0.0015, even more preferably from 0.0001 to 0.0015, and may be 0.

<3-15>

The roasted coffee beans or the like according to any one of the above-mentioned items <1-37>, <2-1>, and<3-1> to <3-14>, wherein the content of the caffeine (D) per kg of the roasted coffee beans is preferably 7.0 g or less, more preferably 5.0 g or less, more preferably 4.0 g or less, even more preferably 3.0 g or less, and is preferably 0.05 g or more, more preferably 0.1 g or more, more preferably 0.15 g or more, even more preferably 0.2 g or more.

<3-16>

The roasted coffee beans or the like according to any one of the above-mentioned items <1-37>, <2-1>, and <3-1> to <3-15>, wherein the content of the caffeine (D) per kg of the roasted coffee beans is preferably from 0.05 g to 7.0 g, more preferably from 0.1 g to 5.0 g, more preferably from 0.15 g to 4.0 g, even more preferably from 0.2 g to 3.0 g.

<3-17>

The roasted coffee beans or the like according to any one of the above-mentioned items <1-37>, <2-1>, and

<3-1> to<3-16>, wherein the water content of the roasted coffee beans is preferably 30 mass% or less, more preferably 20 mass% or less, more preferably 10 mass% or less, even more preferably 5 mass% or less.

<3-18>

The roasted coffee beans or the like according to any one of the above-mentioned items <1-37>, <2-1>, and <3-1> to <3-17>, wherein the roasted coffee beans preferably comprise ground roasted coffee beans.

<3-19>

The roasted coffee beans or the like according to the above-mentioned item <3-18>, wherein the ground roasted coffee beans have an average particle size of preferably 5 mm or less, more preferably 2.5 mm or less, even more preferably 1.5 mm or less, and of preferably 0.001 mm or more, more preferably 0.01 mm or more, even more preferably 0.05 mm or more.

<3-20>

The roasted coffee beans or the like according to the above-mentioned item <3-18> or <3-19>, wherein the ground roasted coffee beans have an average particle size of preferably from 0.001 mm to 5 mm, more preferably from 0.01 mm to 2.5 mm, even more preferably from 0.05 mm to 1.5 mm.

<4-1>

A coffee beverage, comprising:

0.01 mass% to 0.45 mass% of a chlorogenic acid (A);
2 ppm by mass or less of hydroxyhydroquinone (B);
3 ppm by mass or less of 5-hydroxymethylfurfural (C); and
0.04 mass% or less of caffeine (D).

<4-2>

The coffee beverage according to the above-mentioned item <4-1>, wherein the content of the chlorogenic acid (A) is preferably 0.02 mass% or more, more preferably 0.025 mass% or more, even more preferably 0.03 mass% or more, and is preferably 0. 42 mass% or less, more preferably 0.38 mass% or less, even more preferably 0.35 mass% or less.

<4-3>

The coffee beverage according to the above-mentioned item <4 -1> or <4-2>, wherein the content of the chlorogenic acid (A) is preferably from 0.02 mass% to 0.42 mass%, more preferably from 0.025 mass% to 0.38 mass%, even more preferably from 0.03 mass% to 0.35 mass%.

<4-4>

The coffee beverage according to anyone of the above-mentioned items <4-1> to <4-3>, wherein the content of the hydroxyhydroquinone (B) is preferably 1.5 ppm by mass or less, more preferably 1 ppm by mass or less, more preferably 0.7 ppm by mass or less, even more preferably 0.5 ppm by mass or less, and is preferably 0.001 ppm by mass or more, more preferably 0.01 ppm by mass or more.

<4-5>

The coffee beverage according to any one of the above-mentioned items <4-1> to <4-4>, wherein the content of the hydroxyhydroquinone (B) is preferably from 0.001 ppm by mass to 2 ppm by mass, more preferably from 0.001 ppm by mass to 1.5 ppm by mass, more preferably from 0.001 ppm by mass to 1 ppm by mass, more preferably from 0.001 ppm by mass to 0.7 ppm by mass, even more preferably from 0.01 ppm by mass to 0.5 ppm by mass, and may be 0 ppm by mass.

<4-6>

The coffee beverage according to anyone of the above-mentioned items <4-1> to <4-5>, wherein the mass ratio of the hydroxyhydroquinone (B) to the chlorogenic acid (A), [(B)/(A)], is preferably 0.0025 or less, more preferably 0.002 or less, more preferably 0.0015 or less, more preferably 0.001 or less, even more preferably 0.0005 or less, and is preferably 0.00001 or more, more preferably 0.0001 or more.

<4-7>

The coffee beverage according to anyone of the above-mentioned items <4-1> to <4-6>, wherein the mass ratio of the hydroxyhydroquinone (B) to the chlorogenic acid (A), [(B)/(A)], is preferably from 0.00001 to 0.0025, more preferably from 0.00001 to 0.002, more preferably from 0.00001 to 0.0015, more preferably from 0.00001 to 0.001, even more preferably from 0.0001 to 0.0005, and may be 0.

<4-8>

The coffee beverage according to anyone of the above-mentioned items <4-1> to <4-7>, wherein the content of the 5-hydroxymethylfurfural (C) is preferably 2.5 ppm by mass or less, more preferably 2 ppm by mass or less, even more preferably 1.5 ppm by mass or less, and is preferably 0.01 ppm by mass or more, more preferably 0.1 ppm by mass or more.

<4-9>

The coffee beverage according to anyone of the above-mentioned items <4-1> to <4-8>, wherein the content of the 5-hydroxymethylfurfural (C) is preferably from 0.01 ppm by mass to 3 ppm by mass, more preferably from 0.01 ppm by mass to 2.5 ppm by mass, more preferably from 0.01 ppm by mass to 2 ppm by mass, even more preferably from 0.1 ppm by mass to 1.5 ppm by mass, and may be 0 ppm by mass.

<4-10>

The coffee beverage according to any one of the above-mentioned items <4-1> to <4-9>, wherein the mass ratio of the 5-hydroxymethylfurfural (C) to the chlorogenic acid (A), [(C)/(A)], is preferably 0.0055 or less, more preferably 0.005 or less, more preferably 0.0035 or less, more preferably 0.0015 or less, even more preferably 0.0012 or less, and is preferably 0.00001 or more, more preferably 0.0001 or more.

<4-11>

The coffee beverage according to anyone of the above-mentioned items <4-1> to <4-10>, wherein the mass ratio of the 5-hydroxymethylfurfural (C) to the chlorogenic acid (A), [(C)/(A)], is preferably from 0.00001 to 0.0055, more preferably from 0.00001 to 0.005, more preferably from 0.00001 to 0.0035, more preferably from 0.00001 to 0.0015, even more preferably from 0.0001 to 0.0012, and may be 0.

<4-12>

The coffee beverage according to anyone of the above-mentioned items <4-1> to <4-11>, wherein the content of the caffeine (D) is preferably 0. 03 mass% or less, more preferably 0.025 mass% or less, more preferably 0.02 mass% or less, even more preferably 0.01 mass% or less, and is preferably 0.001 mass% or more, more preferably 0.003 mass% or more, even more preferably 0.005 mass% or more.

<4-13>

The coffee beverage according to anyone of the above-mentioned items <4-1> to <4-12>, wherein the content of the caffeine (D) is preferably from 0.001 mass% to 0.04 mass%, more preferably from 0.001 mass% to 0.03 mass%, more preferably from 0.003 mass% to 0.025 mass%, even more preferably from 0.005 mass% to 0.01 mass%.

<4-14>

The coffee beverage according to anyone of the above-mentioned items <4-1> to <4-13>, wherein the mass ratio of the caffeine (D) to the chlorogenic acid (A), [(D)/(A)], is preferably 0.5 or less, more preferably 0.4 or less, more preferably 0.2 or less, more preferably 0.15 or less, even more preferably 0.1 or less, and is preferably 0.02 or more, more preferably 0.025 or more, even more preferably 0.03 or more.

<4-15>

The coffee beverage according to any one of the above-mentioned items <4-1> to <4-14>, wherein the mass ratio of the caffeine (D) to the chlorogenic acid (A), [(D)/(A)], is preferably from 0.02 to 0.5, more preferably from 0.02 to 0.4, more preferably from 0.025 to 0.2, more preferably from 0.025 to 0.15, even more preferably from 0.03 to 0.1.

<4-16>

The coffee beverage according to any one of the above-mentioned items <4-1> to <4-15>, wherein the coffee beverage has a pH of preferably 4.5 or more, more preferably 4.8 or more, even more preferably 5 or more, and of preferably 7 or less, more preferably 6.5 or less, even more preferably 6 or less.

<4-17>

The coffee beverage according to anyone of the above-mentioned items <4-1> to <4-16>, wherein the coffee beverage has a pH of preferably from 4.5 to 7, more preferably from 4.8 to 6.5, even more preferably from 5 to 6.

<4-18>

The coffee beverage according to anyone of the above-mentioned items <4-1> to <4-17>, wherein the coffee beverage has a Brix of preferably 0.8 or more, more preferably 1.0 or more, even more preferably 1.2 or more, and of preferably 3.0 or less, more preferably 2.5 or less, even more preferably 2.3 or less.

<4-19>

The coffee beverage according to anyone of the above-mentioned items <4-1> to <4-18>, wherein the coffee beverage has a Brix of preferably from 0.8 to 3.0, more preferably from 1.0 to 2.5, even more preferably from 1.2 to 2.3.

<4-20>

The coffee beverage according to anyone of the above-mentioned items <4-1> to <4-19>, wherein the coffee beverage is obtained by using, in terms of raw beans, preferably 1 g or more, more preferably 2.5 g or more, even more preferably 4.5 g or more, or preferably 20 g or less, more preferably 15 g or less, even more preferably 10 g or less of roasted coffee beans per 100 g of the coffee beverage.

<4-21>

The coffee beverage according to any one of the above-mentioned items <4-1> to <4-20>, wherein the coffee beverage is obtained by using, in terms of raw beans, preferably from 1 g to 20 g, more preferably from 2.5 g to 15 g, even more preferably from 4.5 g to 10 g of roasted coffee beans per 100 g of the coffee beverage.

<4-22>

The coffee beverage according to anyone of the above-mentioned items <4-1> to <4-21>, preferably further comprising one or two or more of additives selected from the group consisting of the group consisting of a sweetener, a milk component, an antioxidant, a flavor, an organic acid, an organic acid salt, an inorganic acid, an inorganic acid salt, an inorganic salt, a dye, an emulsifier, a preservative, a seasoning, an acidulant, an amino acid, a pH regulator, and a quality stabilizer.

<4-23>

The coffee beverage according to anyone of the above-mentioned items <4-1> to <4-22>, wherein the coffee beverage preferably comprises a black coffee beverage or a milk coffee beverage, and more preferably comprises a black coffee beverage.

<4-24>

The coffee beverage according to any one of the above-mentioned items <4-1> to <4-23>, wherein the coffee beverage preferably comprises a packaged coffee beverage.

<4-25>

The coffee beverage according to the above-mentioned item <4-24>, wherein the container is preferably a molded container mainly formed of polyethylene terephthalate (PET bottle), a metal can, a paper container composited with a metal foil or a plastic film, or a bottle.

<4-26>

The coffee beverage according to any one of the above-mentioned items <4-1> to <4-25>, wherein the coffee beverage preferably comprises a heat-sterilized coffee beverage.

<4-27>

The coffee beverage according to the above-mentioned item <4-26>, wherein the heat sterilization is preferably one that complies with a condition specified by an applicable regulation (Food Sanitation Act in Japan), more preferably retort sterilization, high-temperature short-time sterilization (HTST), or ultrahigh-temperature sterilization (UHT).

<4-28>

The coffee beverage according to any one of the above-mentioned items <4-1> to <4-27>, wherein the coffee beverage is a product obtained by using a coffee extract extracted from the roasted coffee beans of any one of the above-mentioned items <2-1> and <3-1> to <3-20>.

<5-1>

A method of producing roasted coffee beans, comprising:

a first step of adding water to unground raw material roasted coffee beans, followed by heating of the resultant; and a second step of subjecting the raw material roasted coffee beans after the first step to supercritical carbon dioxide extraction.

<5-2>

The method of producing roasted coffee beans according to the above-mentioned item <1> or <5-1>, wherein the unground raw material roasted coffee beans are preferably non-ground whole-grain roasted coffee beans.

<5-3>

The method of producing roasted coffee beans according to any one of the above-mentioned items <1>, <5-1>, and <5-2>, wherein the bean species of the rawmaterial roasted coffee beans is preferably one or two or more selected from the group consisting of the group consisting of arabica, robusta, liberica, and arabusta.

<5-4>

The method of producing roasted coffee beans according to any one of the above-mentioned items <1> and <5-1> to <5-3>, wherein the producing region of the raw material roasted coffee beans is preferably one or two or more selected from the group consisting of the group consisting of Brazil, Colombia, Tanzania, Mocha, Kilimanjaro, Mandheling, Blue Mountain, Guatemala, Vietnam, and Indonesia.

<5-5>

The method of producing roasted coffee beans according to any one of the above-mentioned items <1> and <5-1> to <5-4>, wherein the raw material roasted coffee beans preferably comprise a product obtained by roasting green coffee beans, a product obtained by further roasting roasted coffee beans, or a mixture thereof.

<5-6>

The method of producing roasted coffee beans according to any one of the above-mentioned items <1> and <5-1> to <5-5>, wherein the raw material roasted coffee beans have an L value of preferably 15 or more, more preferably 15.5 or more, more preferably 16 or more, more preferably 16.5 or more, even more preferably 17 or more, and of preferably 50 or less, more preferably 45 or less, more preferably43 or less, more preferably 40 or less, even more preferably 35 or less.

<5-7>

The method of producing roasted coffee beans according to any one of the above-mentioned items <1> and <5-1> to <5-6>, wherein the raw material roasted coffee beans have an L value of preferably from 15 to 50, more preferably from 15 to 45, more preferably from 15.5 to 43, more preferably from 16 to 40, more preferably from 16.5 to 35, even more preferably from 17 to 35.

<5-8>

The method of producing roasted coffee beans according to any one of the above-mentioned items <1> and <5-1> to <5-5>, wherein the raw material roasted coffee beans have an L value of preferably 15 or more, more preferably 15.5 or more, more preferably 16 or more, more preferably 16. 5 or more, even more preferably 17 or more, and of preferably 45 or less, more preferably 43 or less, more preferably 40 or less, even more preferably 35 or less.

<5-9>

The method of producing roasted coffee beans according to any one of the above-mentioned items <1>, <5-1> to <5-5>, and <5-8>, wherein the raw material roasted coffee beans have an L value of preferably from 15 to 45, more preferably from 15.5 to 43, more preferably from 16 to 40, more preferably from 16.5 to 35, even more preferably from 17 to 35.

<5-10>

The method of producing roasted coffee beans according to any one of the above-mentioned items <1> and <5-1> to <5-9>, wherein the raw material roasted coffee beans preferably comprise one of coffee beans or a mixture of coffee beans different in one or more of degree of roasting, bean species, producing region, and L value.

<5-11>

The method of producing roasted coffee beans according to any one of the above-mentioned items <1> and <5-1> to <5-10>, wherein, in the first step, the water to be added preferably comprises one or two or more selected from the group consisting of the group consisting of tap water, distilled water, ion-exchange water, and natural water.

<5-12>

The method of producing roasted coffee beans according to any one of the above-mentioned items <1> and <5-1> to <5-11>, wherein, in the first step, the water is added preferably under normal pressure, under reduced pressure, or under elevated pressure, more preferably under normal pressure.

<5-13>

The method of producing roasted coffee beans according to any one of the above-mentioned items <1> and <5-1> to <5-12>, wherein, in the first step, the temperature of the roasted coffee beans at the time of the addition of the water is preferably from 10°C to 80°C, more preferably from 15°C to 70°C, more preferably from 15°C to 30°C, even more preferably from 18°C to 25°C.

<5-14>

The method of producing roasted coffee beans according to any one of the above-mentioned items <1> and <5-1> to <5-13>, wherein the amount of the water added according to the first step is preferably 10 mass% or more, more preferably 15 mass% or more, even more preferably 20 mass% or more, and is preferably 100 mass% or less, more preferably 90 mass% or less, more preferably 80 mass% or less, more preferably 70 mass% or less, more preferably 60 mass% or less, even more preferably 50 mass% or less, with respect to that of the raw material roasted coffee beans.

<5-15>

The method of producing roasted coffee beans according to any one of the above-mentioned items <1> and <5-1> to <5-14>, wherein the amount of the water added according to the first step is preferably from 10 mass% to 100 mass%, more preferably from 15 mass% to 90 mass%, more preferably from 15 mass% to 80 mass%, more preferably from 15 mass% to 60 mass%, even more preferably from 20 mass% to 50 mass%, with respect to that of the raw material roasted coffee beans.

<5-16>

The method of producing roasted coffee beans according to any one of the above-mentioned items <1> and <5-1> to <5-15>, wherein a method of adding the water according to the first step is preferably a method involving adding the water directly to the raw material roasted coffee beans, a method involving spraying the water to the raw material roasted coffee beans, or a method involving bringing the raw material roasted coffee beans into contact with steam.

<5-17>

The method of producing roasted coffee beans according to any one of the above-mentioned items <1> and <5-1> to <5-16>, wherein, in the first step, the total amount of the water is preferably added continuously or in several batches.

<5-18>

The method of producing roasted coffee beans according to any one of the above-mentioned items <1> and <5-1> to <5-17>, wherein the temperature of the water to be added in the first step is preferably from 10°C to 100°C, more preferably from 10°C to 80°C, more preferably from 15°C to 70°C, more preferably from 18°C to 50°C, even more preferably from 18°C to 25°C.

<5-19>

The method of producing roasted coffee beans according to any one of the above-mentioned items <1> and <5-1> to <5-18>, wherein the temperature of an atmosphere at the time of the addition of the water in the first step is preferably a temperature close to the heating temperature, more preferably from 50°C to 150°C, more preferably from 60°C to 140°C, more preferably from 70°C to 130°C, even more preferably from 80°C to 120°C.

<5-20>

The method of producing roasted coffee beans according to any one of the above-mentioned items <1> and <5-1> to <5-19>, wherein the temperature of the atmosphere at the time of the addition of the water in the first step is preferably from 10°C to 80°C, more preferably from 15°C to 70°C, more preferably from 18°C to 50°C, even more preferably from 18°C to 25°C.

<5-21>

The method of producing roasted coffee beans according to any one of the above-mentioned items <1> and <5-1> to <5-20>, the method preferably comprising, in the first step, mixing the raw material roasted coffee beans with stirring after or while the water is added.

<5-22>

The method of producing roasted coffee beans according to any one of the above-mentioned items <1> and <5-1> to <5-21>, wherein the heat treatment according to the first step is carried out preferably under normal pressure, under elevated pressure, or under reduced pressure, more preferably under elevated pressure.

<5-23>

The method of producing roasted coffee beans according to any one of the above-mentioned items <1> and <5-1> to <5-22>, wherein the heat treatment according to the first step is carried out preferably in an open state or in a sealed state, more preferably in a sealed state.

<5-24>

The method of producing roasted coffee beans according to any one of the above-mentioned items <1> and <5-1> to <5-23>, wherein the heat treatment according to the first step is carried out preferably after a sealed container selected from the group consisting of the group consisting of a metallic pressure-resistant container, a glass heat- and pressure-resistant container, a retort pouch, a can, and a heat- and pressure-resistant bottle is filled with the raw material roasted coffee beans, more preferably after a sealed container selected from the group consisting of the group consisting of a metallic pressure-resistant container, a glass heat-and pressure-resistant container, a can, and a heat- and pressure-resistant bottle is filled with the raw material roasted coffee beans.

<5-25>

The method of producing roasted coffee beans according to any one of the above-mentioned items <1> and <5-1> to <5-24>, wherein the method for the heat treatment according to the first step preferably comprises: a method involving placing the raw material roasted coffee beans in a container, adding the water thereto, sealing the container, and then heating the container at a predetermined temperature for a predetermined period of time; a method involving brining the raw material roasted coffee beans into contact with steam, then placing the coffee beans in a container, sealing the container, and heating the container at a predetermined temperature for a predetermined period of time; or a method involving brining the raw material roasted coffee beans into contact with steam for a predetermined period of time.

<5-26>

The method of producing roasted coffee beans according to any one of the above-mentioned items <1> and <5-1> to <5-25>, wherein the heating temperature according to the first step is preferably 50°C or more, more preferably 60°C or more, more preferably 70°C or more, even more preferably 80°C or more, and is preferably 150°C or less, more preferably 140°C or less, more preferably 130°C or less, even more preferably 120°C or less.

<5-27>

The method of producing roasted coffee beans according to any one of the above-mentioned items <1> and <5-1> to <5-26>, wherein the heating temperature according to the first step is preferably from 50°C to 150°C, more preferably from 60°C to 140°C, more preferably from 70°C to 130°C, even more preferably from 80°C to 120°C.

<5-28>

The method of producing roasted coffee beans according to any one of the above-mentioned items <1> and <5-1> to <5-27>, wherein the heating time according to the first step is preferably 0.1 minute or more, more preferably 0.2 minute or more, more preferably 0.5 minute or more, more preferably 1 minute or more, more preferably 0.1 hour or more, more preferably 0.2 hour or more, more preferably 0.5 hour or more, even more preferably 1 hour or more, and is preferably 10 hours or less, more preferably 8 hours or less, more preferably 6 hours or less, more preferably 4 hours or less, even more preferably 3 hours or less.

<5-29>

The method of producing roasted coffee beans according to any one of the above-mentioned items <1> and <5-1> to <5-28>, wherein the heating time according to the first step is preferably from 0.1 minute to 10 hours, more preferably from 0.2 minute to 10 hours, more preferably from 0.5 minute to 8 hours, more preferably from 1 minute to 8 hours, more preferably from 0.1 hour to 6 hours, more preferably from 0.2 hour to 6 hours, more preferably from 0.5 hour to 4 hours, even more preferably from 1 hour to 3 hours.

<5-30>

The method of producing roasted coffee beans according to any one of the above-mentioned items <1> and <5-1> to <5-29>, wherein the heating temperature according to the first step is preferably from 100°C to 120°C, and the heating time according to the first step is preferably from 0.2 hour to 4 hours, more preferably from 0.5 hour to 3 hours.

<5-31>

The method of producing roasted coffee beans according to any one of the above-mentioned items <1> and <5-1> to <5-30>, wherein the supercritical carbon dioxide extraction is carried out under a pressure condition of preferably 8 MPa or more, more preferably 12 MPa or more, more preferably 20 MPa or more, and of preferably 50 MPa or less, more preferably 40 MPa or less, even more preferably 35 MPa or less.

<5-32>

The method of producing roasted coffee beans according to any one of the above-mentioned items <1> and <5-1> to <5-31>, wherein the supercritical carbon dioxide extraction is carried out under a pressure condition of preferably from 8 MPa to 50 MPa, more preferably from 12 MPa to 40 MPa, even more preferably from 20 MPa to 35 MPa.

<5-33>

The method of producing roasted coffee beans according to any one of the above-mentioned items <1> and <5-1> to <5-32>, wherein the extraction temperature according to the second step is preferably 50°C or more, more preferably 60°C or more, more preferably 75°C or more, more preferably 85°C or more, even more preferably 90°C or more, and is preferably 150°C or less, more preferably 145°C or less, more preferably 140°C or less, more preferably 135°C or less, even more preferably 130°C or less.

<5-34>

The method of producing roasted coffee beans according to any one of the above-mentioned items <1> and <5-1> to <5-33>, wherein the extraction temperature according to the second step is preferably from 50°C to 150°C, more preferably from 60°C to 145°C, more preferably from 75°C to 140°C, more preferably from 85°C to 135°C, even more preferably from 90°C to 130°C.

<5-35>

The method of producing roasted coffee beans according to any one of the above-mentioned items <1> and <5-1> to <5-34>, wherein the extraction time according to the second step is preferably 0.5 hour or more, more preferably 2 hours or more, more preferably 4 hours or more, more preferably 7 hours or more, even more preferably 9 hours or more, and is preferably 20 hours or less, more preferably 18 hours or less, more preferably 16 hours or less, even more preferably 14 hours or less.

<5-36>

The method of producing roasted coffee beans according to any one of the above-mentioned items <1> and <5-1> to <5-35>, wherein the extraction time according to the second step is preferably from 0.5 hour to 20 hours, more preferably from 2 hours to 18 hours, more preferably from 4 hours to 16 hours, more preferably from 7 hours to 16 hours, even more preferably from 9 hours to 14 hours.

<5-37>

The method of producing roasted coffee beans according to any one of the above-mentioned items <1> and <5-1> to <5-36>, wherein the extraction ratio (carbon dioxide (in terms of volume of gas at normal temperature and normal pressure)/raw material roasted coffee beans) according to the second step is preferably 0.01 ($m^3$/g) or more, more preferably 0.02 ($m^3$/g) or more, more preferably 0.04 ($m^3$/g) or more, even more preferably 0.06 ($m^3$/g) or more, and is preferably 0.20 ($m^3$/g) or less, more preferably 0.16 ($m^3$/g) or less, even more preferably 0.12 ($m^3$/g) or less.

<5-38>

The method of producing roasted coffee beans according to any one of the above-mentioned items <1> and <5-1> to <5-37>, wherein the extraction ratio (carbon dioxide (in terms of volume of gas at normal temperature and normal pressure)/raw material roasted coffee beans) according to the second step is preferably from 0.01 ($m^3$/g) to 0.20 ($m^3$/g), more preferably from 0.02 ($m^3$/g) to 0.16 ($m^3$/g), more preferably from 0.04 ($m^3$/g) to 0.12 ($m^3$/g), even more preferably from 0.06 ($m^3$/g) to 0.12 ($m^3$/g).

<5-39>

The method of producing roasted coffee beans according to any one of the above-mentioned items <1> and <5-1> to <5-38>, wherein, in the second step, the flow rate (in terms of volume of gas at normal temperature and normal pressure) of carbon dioxide at the time of contact with the raw material roasted coffee beans is preferably 1.0 $m^3$ or more, more preferably 2.0 $m^3$ or more, more preferably 4.0 $m^3$ or more, even more preferably 7.0 $m^3$ or more, and is preferably 50 $m^3$ or less, more preferably 30 $m^3$ or less, even more preferably 15 $m^3$ or less.

<5-40>

The method of producing roasted coffee beans according to any one of the above-mentioned items <1> and <5-1> to <5-39>, wherein, in the second step, the flow rate (in terms of volume of gas at normal temperature and normal pressure) of carbon dioxide at the time of contact with the raw material roasted coffee beans is preferably from 1.0 $m^3$ to 50 $m^3$, more preferably from 2.0 $m^3$ to 30 $m^3$, more preferably from 4.0 $m^3$ to 15 $m^3$, even more preferably from 7.0 $m^3$ to 15 $m^3$.

<5-41>

The method of producing roasted coffee beans according to any one of the above-mentioned items <1> and <5-1> to <5-40>, wherein the supercritical carbon dioxide extraction according to the second step is preferably carried out in the presence of an entrainer.

<5-42>

The method of producing roasted coffee beans according to the above-mentioned item <5-41>, wherein the entrainer is preferably water, more preferably one or two or more selected from the group consisting of tap water, distilled water, ion-exchange water, and natural water.

<5-43>

The method of producing roasted coffee beans according to the above-mentioned item <5-41> or <5-42>, wherein the method of performing the supercritical carbon dioxide extraction in the presence of the entrainer preferably comprises a method involving performing extraction by causing supercritical carbon dioxide to pass through a filling tank filled with the entrainer to supply a mixed medium of the entrainer and the supercritical carbon dioxide to an extraction tank.

<5-44>

The method of producing roasted coffee beans according to any one of the above-mentioned items <1> and <5-1> to <5-43>, comprising, after the second step, a step of drying the roasted coffee beans.

<5-45>

The method of producing roasted coffee beans according to the above-mentioned item <1> or <5-44>, wherein the method for the drying preferably comprises one or two or more selected from the group consisting of a method involving drying the roasted coffee beans using a blast fan, a method involving drying the roasted coffee beans under reduced pressure, and a method involving freeze-drying the roasted coffee beans.

<5-46>

The method of producing roasted coffee beans according to any one of the above-mentioned items <1> and <5-1> to <5-45>, wherein the water content of the roasted coffee beans is preferably 30 mass% or less, more preferably 20 mass% or less, more preferably 10 mass% or less, even more preferably 5 mass% or less.

<5-47>

The method of producing roasted coffee beans according to any one of the above-mentioned items <1> and <5-1> to <5-46>, wherein, in the roasted coffee beans, the content of the chlorogenic acid (A) per kg of the roasted coffee beans is preferably 2.0 g or more, more preferably 3.0 g or more, more preferably 10.0 g or more, even more preferably 20.0 g or more, and is preferably 80.0 g or less, more preferably 75.0 g or less, more preferably 70.0 g or less, even more preferably 65.0 g or less.

<5-48>

The method of producing roasted coffee beans according to any one of the above-mentioned items <1> and <5-1> to <5-47>, wherein, in the roasted coffee beans, the content of the chlorogenic acid (A) per kg of the roasted coffee beans is preferably from 2.0 g to 80.0 g, more preferably from 3.0 g to 75.0 g, more preferably from 10.0 g to 70.0 g, even more preferably from 20.0 g to 65.0 g.

<5-49>

The method of producing roasted coffee beans according to the above-mentioned item <5-47> or <5-48>, wherein the chlorogenic acid (A) comprises preferably one or two or more selected from the group consisting of 3-caffeoylquinic acid, 4-caffeoylquinic acid, 5-caffeoylquinic acid, 3-feruloylquinic acid, 4-feruloylquinic acid, 5-feruloylquinic acid, 3,4-dicaffeoylquinic acid, 3,5-dicaffeoylquinic acid, and 4,5-dicaffeoylquinic acid, more preferably all of the nine .

<5-50>

The method of producing roasted coffee beans according to any one of the above-mentioned items <1> and <5-1> to <5-49>, wherein, in the roasted coffee beans, the content of the hydroxyhydroquinone (B) per kg of the roasted coffee beans is preferably 50 mg or less, more preferably 40 mg or less, more preferably 30 mg or less, more preferably 20 mg or less, even more preferably 10 mg or less, and is preferably 0.001 mg or more, more preferably 0.01 mg or more.

<5-51>

The method of producing roasted coffee beans according to any one of the above-mentioned items <1> and <5-1> to <5-50>, wherein, in the roasted coffee beans, the content of the hydroxyhydroquinone (B) per kg of the roasted coffee beans is preferably from 0.001 mg to 40 mg, more preferably from 0.001 mg to 30 mg, more preferably from 0.001 mg to 20 mg, more preferably from 0.001 mg to 10 mg, even more preferably 0.01 mg to 10 mg, and may be 0 mg.

<5-52>

The method of producing roasted coffee beans according to any one of the above-mentioned items <1> and <5-1> to <5-51>, wherein, in the roasted coffee beans, the content of the 5-hydroxymethylfurfural (C) per kg of the roasted coffee beans is preferably 70 mg or less, more preferably 65 mg or less, more preferably 60 mg or less, more preferably 55 mg or less, more preferably 50 mg or less, more preferably 40 mg or less, even more preferably 30 mg or less, and is preferably 0.01 mg or more, more preferably 0.1 mg or more.

<5-53>

The method of producing roasted coffee beans according to any one of the above-mentioned items <1> and <5-1> to <5-52>, wherein, in the roasted coffee beans, the content of the 5-hydroxymethylfurfural (C) per kg of the roasted coffee beans is preferably from 0.01 mg to 65 mg, more preferably from 0.01 mg to 60 mg, more preferably from 0.01 mg to 55 mg, more preferably from 0.01 mg to 50 mg, more preferably from 0.01 mg to 40 mg, even more preferably from 0.1 mg to 30 mg, and may be 0 mg.

<5-54>

The method of producing roasted coffee beans according to any one of the above-mentioned items <1> and <5-1> to <5-53>, wherein the mass ratio [(C)/(A)] of the 5-hydroxymethylfurfural (C) to the chlorogenic acid (A) in the roasted coffee beans is preferably 0.006 or less, more preferably 0.005 or less, more preferably 0.0037 or less, even more preferably 0.0015 or less, and is preferably 0.00001 or more, more preferably 0.0001 or more.

<5-55>

The method of producing roasted coffee beans according to any one of the above-mentioned items <1> and <5-1> to <5-54>, wherein the mass ratio [(C)/(A)] of the 5-hydroxymethylfurfural (C) to the chlorogenic acid (A) in the roasted coffee beans is preferably from 0.00001 to 0.006, more preferably from 0.00001 to 0.005, more preferably from 0.00001 to 0.0037, more preferably from 0.00001 to 0.0015, even more preferably from 0.0001 to 0.0015, and may be 0.

<5-56>

The method of producing roasted coffee beans according to any one of the above-mentioned items <1> and <5-1> to <5-55>, wherein, in the roasted coffee beans, the content of the caffeine (D) per kg of the roasted coffee beans is preferably 10.0 g or less, more preferably 8.0 g or less, more preferably 6.0 g or less, even more preferably 5.0 g or less, and is preferably 0.1 g or more, more preferably 0.2 g or more, more preferably 0.5 g or more, even more preferably 1.0 g or more.

<5-57>

The method of producing roasted coffee beans according to any one of the above-mentioned items <1> and <5-1> to <5-56>, wherein, in the roasted coffee beans, the content of the caffeine (D) per kg of the roasted coffee beans is preferably from 0.1 g to 10.0 g, more preferably from 0.2 g to 8.0 g, more preferably from 0.5 g to 6.0 g, even more preferably from 1.0 g to 5.0 g.

<5-58>

The method of producing roasted coffee beans according to any one of the above-mentioned items <1> and <5-1> to <5-57>, wherein the roasted coffee beans have an L value of preferably 15 or more, more preferably 15.5 or more, more preferably 16 or more, more preferably 16.5 or more, even more preferably 17 or more, and of preferably 45 or less, more preferably 43 or less, more preferably 40 or less, more preferably 35 or less, even more preferably 30 or less.

<5-59>

The method of producing roasted coffee beans according to any one of the above-mentioned items <1> and <5-1> to <5-58>, wherein the roasted coffee beans have an L value of preferably from 15 to 43, more preferably from 15.5 to 40, more preferably from 16 to 35, more preferably from 16.5 to 35, even more preferably from 17 to 30.

<5-60>

The method of producing roasted coffee beans according to any one of the above-mentioned items <1> and <5-1> to <5-59>, wherein the roasted coffee beans are preferably ground.

<5-61>

The method of producing roasted coffee beans according to the above-mentioned item <5-60>, wherein the ground roasted coffee beans have an average particle size of preferably 5 mm or less, more preferably 2.5 mm or less, even more preferably 1.5 mm or less, and of preferably 0.001 mm or more, more preferably 0.01 mm or more, even more preferably 0.05 mm or more.

<5-62>

The method of producing roasted coffee beans according to the above-mentioned item <5-60> or <5-61>, wherein the ground roasted coffee beans have an average particle size of preferably from 0.001 mm to 5 mm, more preferably from 0.01 mm to 2.5 mm, even more preferably from 0.05 mm to 1.5 mm.

Examples

1. Analysis of Roasted Coffee Beans and Coffee beverage

Coffee extract solutions were obtained from roasted coffee beans in conformity with a method to be described later. Roasted coffee beans obtained in Examples, Referential Examples, and Comparative Examples were subjected to the following analyses based on the resultant coffee extract solutions. Coffee beverages obtained in Examples, Referential Examples, and Comparative Examples were also subjected to the following analyses.

(1) Analysis of Chlorogenic Acids (CGA), Caffeine (Caf), and 5-hydroxymethylfurfural (5-HMF)

A HPLC was used as an analyzer. The model numbers of component units in the analyzer are as follows:

- UV detector: L-2420 (Hitachi High-Technologies Corporation),
- Column oven: L-2300 (Hitachi High-Technologies Corporation),
- Pump: L-2130 (Hitachi High-Technologies Corporation),
- Autosampler: L-2200 (Hitachi High-Technologies Corporation),
- Column: Cadenza CD-C18, 4.6 mm (inner diameter) ×150 mm (length), particle size: 3 pm (Imtakt Corp.).

Analysis conditions are as follows:

- Sample injection volume: 10 μL,
- Flow rate: 1.0 mL/min,
- Preset wavelength of UV detector: 325 nm (CGA), 270 nm (Caf, 5-HMF)
- Preset temperature of column oven: 35°C,
- Eluent A: 5 (V/V) % acetonitrile solution containing 0.05 M acetic acid, 0.1 mM HEDPO, and 10 mM sodium acetate,
- Eluent B: acetonitrile.

For preparing Eluent A, distilled water for high-performance liquid chromatography (manufactured by Kanto Chemical Co., Inc.), acetonitrile for high-performance liquid chromatography (manufactured by Kanto Chemical Co., Inc.), acetic acid (guaranteed reagent, manufactured by Wako Pure Chemical Industries, Ltd.), and 1-hydroxyethane-1,1-diphosphonic acid (60% aqueous solution, manufactured by Tokyo Chemical Industry Co., Ltd.) were used.

Concentration Gradient Conditions
(vol%)

| Time | Eluent A | Eluent B |
|---|---|---|
| 0.0 min | 100% | 0% |
| 10.0 min | 100% | 0% |
| 15.0 min | 95% | 5% |
| 20.0 min | 95% | 5% |
| 22.0 min | 92% | 8% |
| 50.0 min | 92% | 8% |
| 52.0 min | 10% | 90% |
| 60.0 min | 10% | 90% |
| 60.1 min | 100% | 0% |
| 70.0 min | 100% | 0% |

In HPLC, a coffee extract solution or a coffee beverage was filtrated with a membrane filter (GL Chromatodisc 25A, pore size: 0.45 μm, manufactured by GL Sciences Inc.), and the filtrate was subjected to analysis.

Retention Times of Chlorogenic Acids (unit: min)

- Monocaffeoylquinic acid: 3 peaks in total at 6.4, 11.3, and 15.0,
- Monoferuloylquinic acid: 3 peaks in total at 16.2, 21.6, and 22.8,
- Dicaffeoylquinic acid: 3 peaks in total at 39.6, 40.4, and 41.0.

From area values for the nine of chlorogenic acids determined in the foregoing, the content (g/kg) of the chlorogenic acids was determined with reference to 5-caffeoylquinic acid as a standard substance.

In the HPLC analysis performed under the above-mentioned conditions, the retention time of caffeine was 20.4 minutes. From the peak area value obtained, the content (g/kg) of caffeine was determined with reference to caffeine (guaranteed reagent, manufactured by Wako Pure Chemical Industries, Ltd.) as a standard substance.

In the HPLC analysis performed under the above-mentioned conditions, the retention time of 5-HMF was 6.1 minutes. From the peak area value obtained, the content (mg/kg) of 5-HMF was determined with reference to 5-HMF (guaranteed reagent, manufactured by Tokyo Chemical Industry Co., Ltd.) as a standard substance.

(2) Analysis of Hydroxyhydroquinone (HHQ)

CoulArray system (Model 5600A, manufacturedbyESA, Inc., USA) serving as a HPLC-electrochemical detector (coulometric type) was used as an analyzer. The model numbers of constituent units of the analyzer are as follows:

- Analytical cell: Model 5010, CoulArray Organizer,
- CoulArray Electronics Module and Software: Model 5600A,
- Solvent delivery module: Model 582, Gradient Mixer,
- Autosampler: Model 542, Pulse Damper,
- Degasser: Degasys Ultimate DU3003,
- Column oven: 505,
- Column: CAPCELL PAK C18 AQ, 4.6 mm (inner diameter) $\times$250 mm (length), particle size: 5 $\mu$m (manufactured by Shiseido Co., Ltd.).

Analysis conditions are as follows:

- Sample injection volume: 10 pL,
- Flow rate: 1.0 mL/min,
- Applied voltage of electrochemical detector: 200 mV,
- Preset temperature of column oven: 40°C,
- Eluent C: 5 (V/V)% methanol solution containing 0.1 (W/V)% phosphoric acid and 0.1 mM HEDPO,
- Eluent D: 50 (V/V)% methanol solution containing 0.1 (W/V)% phosphoric acid and 0.1 mM HEDPO.

Concentration Gradient Conditions
(vol%)

| Time | Eluent C | Eluent D |
|---|---|---|
| 0.0 min | 100% | 0% |
| 10.0 min | 100% | 0% |
| 10.1 min | 0% | 100% |
| 20.0 min | 0% | 100% |
| 20.1 min | 100% | 0% |
| 50.0 min | 100% | 0% |

A coffee extract solution or a coffee beverage was caused to pass through Bond Elut SCX (packed weight of solid phase: 500 mg, reservoir capacity: 3 mL, manufactured by GL Sciences Inc.), and a passed solution excluding about 0.5 mL of the initial passed solution was obtained. The passed solution was filtrated with a membrane filter (GL Chromatodisc 25A, pore size: 0.45 $\mu$m, manufactured by GL Sciences Inc.), and the filtrate was immediately subjected to analysis.

In the analysis performed with the HPLC-electrochemical detector under the above-mentioned conditions, the retention time of hydroxyhydroquinone was 6.1 minutes. From the peak area value obtained, the content (mg/kg) of hydroxyhydroquinone was determined with reference to hydroxyhydroquinone (manufactured by Wako Pure Chemical Industries, Ltd.) as a standard substance.

2. Measurement of L Value

The L value of a sample was measured using a color-difference meter (spectrophotometer SE-2000, manufactured by Nippon Denshoku Industries Co., Ltd.).

3. Sensory Evaluation

Three expert panelists evaluated the coffee beverages obtained in Examples, Comparative Examples, and Referential Examples for their coarseness, clean aftertaste, and sourness in accordance with the following criteria, and averages were calculated from the resultant scores. Then, final scores were determined from the averages in accordance with Table 1 below.

Table 1

| Average of scores | Final score |
|---|---|
| 4.75 or more and 5.00 or less | 5.0 |
| 4.25 or more and less than 4.75 | 4.5 |
| 3.75 or more and less than 4.25 | 4.0 |
| 3.25 or more and less than 3.75 | 3.5 |
| 2.75 or more and less than 3.25 | 3.0 |
| 2.25 or more and less than 2.75 | 2.5 |
| 1.75 or more and less than 2.25 | 2.0 |
| 1.25 or more and less than 1.75 | 1.5 |
| 1.00 or more and less than 1.25 | 1.0 |

Evaluation Criteria of Coarseness

The coffee beverages of Examples 1 to 11, Referential Examples 1 to 3, and Comparative Examples 1 to 4 were evaluated on the following five-point scale based on the coarseness of the coffee beverage of Example 7 defined as score 5 and the coarseness of the coffee beverage of Comparative Example 1 defined as score 1. The samples of Examples 12 to 19, Referential Examples 4 to 6, and Comparative Examples 5 to 7 were evaluated on the following five-point scale based on the coarseness of the coffee beverage of Example 18 defined as score 5 and the coarseness of the coffee beverage of Referential Example 6 defined as score 1.
5: No coarseness is sensed.
4: Coarseness is slightly sensed.
3: Coarseness is sensed.
2: Coarseness is comparatively strongly sensed.
1: Coarseness is strongly sensed.

Evaluation Criteria of Clean Aftertaste

The coffee beverages of Examples 1 to 11, Referential Examples 1 to 3, and Comparative Examples 1 to 4 were evaluated on the following five-point scale based on the clean aftertaste of the coffee beverage of Example 7 defined as score 5 and the clean aftertaste of the coffee beverage of Comparative Example 1 defined as score 1. The coffee beverages of Examples 12 to 19, Referential Examples 4 to 6, and Comparative Examples 5 to 7 were evaluated on the following five-point scale based on the clean aftertaste of the coffee beverage of Example 18 defined as score 5 and the clean aftertaste of the coffee beverage of Referential Example 6 defined as score 1. The term "clean aftertaste" refers to a state in which an unpleasant bitterness does not remain as an aftertaste.
5: A very clean aftertaste is sensed.
4: A clean aftertaste is sensed.

3: A slightly clean aftertaste is sensed.
2: A slightly unclean aftertaste is sensed.
1: An unclean aftertaste is sensed.

Evaluation Criteria of Sourness

The coffee beverages of Examples 1 to 11, Referential Examples 1 to 3, and Comparative Examples 1 to 4 were evaluated on the following five-point scale based on the sourness of the coffee beverage of Referential Example 2 defined as score 4 and the sourness of the coffee beverage of Comparative Example 1 defined as score 1. The coffee beverages of Examples 12 to 19, Referential Examples 4 to 6, and Comparative Examples 5 to 7 were evaluated on the following five-point scale based on the sourness of the coffee beverage of Referential Example 6 defined as score 5 and the sourness of the coffee beverage of Comparative Example 5 defined as score 1.
5: No sourness is sensed.
4: Slight sourness is sensed.
3: Sourness is sensed, and taste is balanced.
2: Slightly strong sourness is sensed.
1: Strong sourness is sensed.

Example 1

(First Step)

Raw material roasted coffee beans having an L value of 18 (*Coffea arabica*, produced in Brazil) were ground into medium powder (average particle size: 1.5 mm) with a pulverizer (High Cut Mill, manufactured by Kalita), and 120 g of the powder was weighed and placed in a glass container. 120 g of ion-exchange water was added thereto, and the contents were mixed and then heated at 40°C for 6 hours.

(Second Step)

Subsequently, 100 g of the beans containing 100 g of water (total weight: 200 g) out of the raw material roasted coffee beans after the heating were enclosed in an extraction tank of a supercritical extraction device (manufactured by Nitto Koatsu Co., Ltd.), and carbon dioxide in a supercritical state (19.08 L) was supplied under an elevated pressure of 28 MPa at 40°C for 6 hours. The volume of carbon dioxide after extraction was 4.12 $m^3$ (gas state, 1 atm).

(Post-treatment)

The roasted coffee beans after the treatment were dried with a freeze-drying machine (FDU-2100, manufactured by Tokyo Rikakikai Co., Ltd.) so as to have a water content of 1.0 mass%. Thus, roasted coffee beans were obtained.

(Analysis and Evaluation)

The resultant roasted coffee beans were ground with a pulverizer (Wonder Blender WB-01, manufactured by Osaka Chemical Co., Ltd.), and 80 g of water for extraction (a solution obtained by dissolving 1 g of phosphoric acid and 0.03 g of 1-hydroxyethane-1, 1-diphosphonic acid (HEDPO) in 1 L of ion-exchange water) was added to 0.5 g of a finely ground product having an average particle size of 0.030 mm. The extraction was performed by immersing for 10 minutes while maintaining the temperature of the mixture at from 95°C to 99°C, and the supernatant was collected. Thus, a coffee extract solution was obtained. The resultant coffee extract solution was subjected to componential analysis.
100 g of hot water at 98°C to 100°C was added to 5 g of the resultant roasted coffee beans, and the mixture was stirred for 10 minutes and filtrated with a commercially available coffee filter to yield a coffee beverage. The resultant coffee beverage was subjected to analysis and a sensory test. The results are shown in Table 2. In addition, the resultant coffee beverage was found to have a pH of 5.1.

Example 2

Roasted coffee beans were obtained in the same manner as in Example 1 except that the temperature for extraction with supercritical carbon dioxide was changed to 70°C. The resultant roasted coffee beans were subjected to the componential analysis and the sensory test in the same manner as in Example 1. The results are shown in Table 2.

Example 3

Roasted coffee beans were obtained in the same manner as in Example 2 except that the extraction time with supercritical carbon dioxide was changed to 3 hours (9.45 L). The resultant roasted coffee beans were subjected to the componential analysis and the sensory test in the same manner as in Example 1. The results are shown in Table 2.

Example 4

Roasted coffee beans were obtained in the same manner as in Example 2 except that raw material roasted coffee beans having an L value of 28 (*Coffea robusta,* produced in Vietnam) were used. The resultant roasted coffee beans were subjected to the componential analysis and the sensory test in the same manner as in Example 1. The results are shown in Table 2.

Example 5

Roasted coffee beans were obtained in the same manner as in Example 3 except that raw material roasted coffee beans having an L value of 28 (*Coffea robusta,* produced in Vietnam) were used. The resultant roasted coffee beans were subjected to the componential analysis and the sensory test in the same manner as in Example 1. The results are shown in Table 2.

Example 6

Roasted coffee beans were obtained in the same manner as in Example 4 except that the extraction temperature in the second step was changed to 80°C. The resultant roasted coffee beans were subjected to the componential analysis and the sensory test in the same manner as in Example 1. The results are shown in Table 2.

Example 7

Roasted coffee beans were obtained in the same manner as in Example 4 except that the extraction temperature in the second step was changed to 100°C. The resultant roasted coffee beans were subjected to the componential analysis and the sensory test in the same manner as in Example 1. The results are shown in Table 2.

Example 8

Roasted coffee beans were obtained in the same manner as in Example 4 except that raw material roasted coffee beans having an L value of 35 (*Coffea robusta,* produced in Vietnam) were used. The resultant roasted coffee beans were subjected to the componential analysis and the sensory test in the same manner as in Example 1. The results are shown in Table 2.

Example 9

Roasted coffee beans were obtained in the same manner as in Example 1 except that the pressure condition in the second step was changed to 15 MPa. The resultant roasted coffee beans were subjected to the componential analysis and the sensory test in the same manner as in Example 2. The results are shown in Table 2.

Example 10

Roasted coffee beans were obtained in the same manner as in Example 2 except that water was used as an entrainer in supercritical carbon dioxide. The resultant roasted coffee beans were subjected to the componential analysis and the sensory test in the same manner as in Example 1. The results are shown in Table 2.

Example 11

Roasted coffee beans were obtained in the same manner as in Example 2 except that the heating temperature in the first step was changed to 60°C, and the heating time was changed to 180 minutes. The resultant roasted coffee beans were subjected to the componential analysis and the sensory test in the same manner as in Example 1. The results are shown in Table 2.

Referential Example 1

Raw material roasted coffee beans having an L value of 18 were ground with a pulverizer (Wonder Blender WB-01, manufactured by Osaka Chemical Co., Ltd.) to yield finely ground roasted coffee beans having an average particle size of 0.030 mm. The resultant roasted coffee beans were subjected to the componential analysis in the same manner as in Example 1. In addition, raw material roasted coffee beans having an L value of 18 were ground into medium powder (average particle size: 1.5 mm) with a pulverizer (High Cut Mill, manufactured by Kalita). The resultant ground roasted coffee beans were subjected to the sensory test in the same manner as in Example 1. The results are shown in Table 2.

Referential Example 2

Rawmaterial roasted coffee beans having an L value of 28 (Coffea robusta, produced in Vietnam) were ground with a pulverizer (Wonder Blender WB-01, manufactured by Osaka Chemical Co., Ltd.) to yield finely ground roasted coffee beans having an average particle size of 0.030 mm. The resultant roasted coffee beans were subjected to the componential analysis in the same manner as in Example 1. In addition, raw material roasted coffee beans having an L value of 28 (*Coffea robusta,* produced in Vietnam) were ground into medium powder (average particle size: 1.5 mm) with a pulverizer (High Cut Mill, manufactured by Kalita). The resultant ground roasted coffee beans were subjected to the sensory test in the same manner as in Example 1. The results are shown in Table 2.

Referential Example 3

Raw material roasted coffee beans having an Lvalue of 35 (*Coffea robusta,* produced in Vietnam) were ground with a pulverizer (Wonder Blender WB-01, manufactured by Osaka Chemical Co., Ltd.) to yield finely ground roasted coffee beans having an average particle size of 0.030 mm. The resultant roasted coffee beans were subjected to the componential analysis in the same manner as in Example 1. In addition, raw material roasted coffee beans having an L value of 35 (*Coffea robusta,* produced in Vietnam) were ground into medium powder (average particle size: 1.5 mm) with a pulverizer (High Cut Mill, manufactured by Kalita). The resultant ground roasted coffee beans were subjected to the sensory test in the same manner as in Example 1. The results are shown in Table 2.

Comparative Example 1

Roasted coffee beans were obtained in the same manner as in Example 1 except that the second step was not carried out. The resultant roasted coffee beans were subjected to the componential analysis and the sensory test in the same manner as in Example 1. The results are shown in Table 2.

Comparative Example 2

Roasted coffee beans were obtained in the same manner as in Example 2 except that the first step was not carried out. The resultant roasted coffee beans were subjected to the componential analysis and the sensory test in the same manner as in Example 1. The results are shown in Table 2.

Comparative Example 3

Roasted coffee beans were obtained in the same manner as in Example 4 except that the second step was not carried out. The resultant roasted coffee beans were subjected to the componential analysis and the sensory test in the same manner as in Example 1. The results are shown in Table 2.

Comparative Example 4

Roasted coffee beans were obtained in the same manner as in Example 4 except that the first step was not carried out. The resultant roasted coffee beans were subjected to the componential analysis and the sensory test in the same manner as in Example 1. The results are shown in Table 2.

Table 2

| | | Example | | | | | | | | | | | Referential Example | | | Comparative Example | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 1 | 2 | 3 | 4 |
| First step | Form | Ground beans | Ground beans | Ground beans | Ground beans | Ground beans | Ground beans | Ground beans | Ground beans | Ground beans | Ground beans | Ground beans | Ground beans | Ground beans | Ground beans | Ground beans | Ground beans | Ground beans | Ground beans |
| | L value | 18 | 18 | 18 | 28 | 28 | 28 | 28 | 35 | 18 | 18 | 18 | 18 | 28 | 35 | 18 | 18 | 28 | 28 |
| | Bean species | Arabica | Arabica | Arabica | Robusta | Robusta | Robusta | Robusta | Robusta | Arabica | Arabica | Arabica | Arabica | Robusta | Robusta | Arabica | Arabica | Robusta | Robusta |
| | Amount of water added (with respect to that of beans, mass%) | 100 | 100 | 100 | 100 | 100 | 100 | 100 | 100 | 100 | 100 | 100 | - | - | - | 100 | - | 100 | - |
| | Heating temperature (°C) | 40 | 40 | 40 | 40 | 40 | 40 | 40 | 40 | 40 | 40 | 60 | - | - | - | 40 | - | 40 | - |
| | Heating time (min) | 360 | 360 | 360 | 360 | 360 | 360 | 360 | 360 | 360 | 360 | 180 | - | - | - | 360 | - | 360 | - |

(continued)

| | | Example | | | | | | | | | | | Referential Example | | | Comparative Example | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 1 | 2 | 3 | 4 |
| Second step | Pressure condition (Mpa) | 28 | 28 | 28 | 28 | 28 | 28 | 28 | 28 | 15 | 28 | 28 | - | - | - | - | 28 | - | 28 |
| | Extraction temperature (°C) | 40 | 70 | 70 | 70 | 70 | 80 | 100 | 70 | 70 | 70 | 70 | - | - | - | - | 70 | - | 70 |
| | Extraction time (hr) | 6 | 6 | 3 | 6 | 3 | 6 | 6 | 6 | 6 | 6 | 6 | - | - | - | - | 6 | - | 6 |
| | Extraction ratio (gas, m$^3$/g beans) | 0.04 | 0.07 | 0.04 | 0.07 | 0.04 | 0.08 | 0.08 | 0.08 | 0.07 | 0.07 | 0.07 | - | - | - | - | 0.07 | - | 0.07 |
| | Flow rate of $CO_2$ (gas, m$^3$) | 4.1 | 7.1 | 3.6 | 7.2 | 3.7 | 7.6 | 7.6 | 7.7 | 6.7 | 6.5 | 6.8 | - | - | - | - | 7.1 | - | 7.1 |
| | Flow rate of $CO_2$ (gas, m$^3$/h) | 0.69 | 1.18 | 1.20 | 1.20 | 1.23 | 1.27 | 1.27 | 1.28 | 1.12 | 1.08 | 1.13 | - | - | - | - | 1.18 | - | 1.18 |
| | Use of entrainer | Not used | Not used | Not used | Not used | Not used | Not used | Not used | Not used | Not used | Used | Not used | - | - | - | - | Not used | - | Not used |

(continued)

| | | Example | | | | | | | | | | | | Referential Example | | | Comparative Example | | | |
|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | | 1 | 2 | 3 | 1 | 2 | 3 | 4 |
| Analysis values of roasted beans | (A) CGA (g/kg) | 7.4 | 7.4 | 7.4 | 34.6 | 34.6 | 34.6 | 34.6 | 74.8 | 7.4 | 8.0 | 8.5 | | 7.4 | 34.6 | 74.8 | 7.4 | 7.4 | 34.6 | used 34.6 |
| | (B) HHQ (mg/kg) | 2.5 | 9.4 | 9.4 | 4.4 | 4.4 | 3.5 | 1.5 | 1.0 | 2.0 | 5.0 | 3.0 | | 265.4 | 115.3 | 88.2 | 9.2 | 265.4 | 5.1 | 115.3 |
| | (C) S-HMF (mg/kg) | 40.7 | 26.0 | 42.0 | 59.0 | 66.0 | 45.0 | 30.0 | 58.3 | 26.0 | 15.0 | 17.0 | | 106 | 246 | 305 | 86 | 55 | 221 | 114.7 |
| | (D) Caf (g/kg) | 3.2 | 0.6 | 2.4 | 3.7 | 8.8 | 2.4 | 1.2 | 3.5 | 8.4 | 0.8 | 1.9 | | 13.7 | 24.3 | 22.9 | 13.7 | 1.7 | 24.2 | 6.1 |
| | Mass ratio (C)/(A) | 0.0055 | 0.0035 | 0.0057 | 0.0017 | 0.0019 | 0.0013 | 0.0009 | 0.0008 | 0.0035 | 0.0019 | 0.0020 | | 0.014 | 0.007 | 0.004 | 0.012 | 0.007 | 0.006 | 0.003 |
| | Brix value | 1.30 | 1.31 | 1.31 | 1.42 | 1.41 | 1.43 | 1.44 | 1.46 | 1.31 | 1.31 | 1.30 | | 1.29 | 1.41 | 1.44 | 1.29 | 1.29 | 1.41 | 1.41 |
| Analysis values of coffee beverage | (A) CGA (mass%) | 0.034 | 0.035 | 0.035 | 0.163 | 0.163 | 0.163 | 0.163 | 0.338 | 0.034 | 0.037 | 0.039 | | 0.033 | 0.164 | 0.337 | 0.033 | 0.032 | 0.163 | 0.163 |
| | (B) HHQ (ppm by mass) | 0.10 | 0.38 | 0.38 | <0.10 | <0.10 | <0.10 | <0.10 | <0.10 | <0.10 | 0.20 | 0.12 | | 11.02 | 4.68 | 3.53 | 0.40 | 10.62 | 0.20 | 4.61 |
| | (C) S-HMF (ppm by mass) | 1.63 | 1.04 | 1.70 | 2.36 | 2.64 | 1.80 | 1.20 | 2.33 | 1.04 | 0.60 | 0.68 | | 4.24 | 9.84 | 12.2 | 3.44 | 2.20 | 8.84 | 4.59 |
| | (D) Caf (mass%) | 0.013 | 0.002 | 0.010 | 0.015 | 0.035 | 0.010 | 0.005 | 0.014 | 0.034 | 0.003 | 0.008 | | 0.058 | 0.097 | 0.092 | 0.058 | 0.007 | 0.097 | 0.024 |
| | Mass ratio (C)/(A) | 0.0048 | 0.0030 | 0.0050 | 0.0014 | 0.0016 | 0.0011 | 0.0007 | 0.0007 | 0.0031 | 0.0016 | 0.0017 | | 0.0130 | 0.0060 | 0.0036 | 0.0106 | 0.0069 | 0.0054 | 0.0028 |
| | Mass ratio (B)/(A) | 0.0003 | 0.0011 | 0.0011 | <0.00006 | <0.00006 | <0.00006 | <0.00006 | <0.00003 | 0.0003 | 0.0005 | 0.0003 | | 0.0339 | 0.0029 | 0.0010 | 0.0012 | 0.0332 | 0.0001 | 0.0028 |
| | Mass ratio (D)/(A) | 0.382 | 0.057 | 0.286 | 0.091 | 0.216 | 0.059 | 0.029 | 0.041 | 1.000 | 0.080 | 0.197 | | 1.785 | 0.593 | 0.272 | 1.785 | 0.219 | 0.594 | 0.150 |

(continued)

| | | Example | | | | | | | | | | | Referential Example | | | Comparative Example | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 1 | 2 | 3 | 4 |
| Evaluation | Coarseness | 4.5 | 5.0 | 4.5 | 4.0 | 3.5 | 4.5 | 5.0 | 4.0 | 4.5 | 5.0 | 4.5 | 1.5 | 1.5 | 1.5 | 1.0 | 3.0 | 1.0 | 3.0 |
| | Clean aftertaste | 4.0 | 5.0 | 4.5 | 4.0 | 3.5 | 4.5 | 5.0 | 4.0 | 3.5 | 4.0 | 3.5 | 3.0 | 3.0 | 3.0 | 1.0 | 3.0 | 1.0 | 3.0 |
| | Sourness | 3.5 | 3.0 | 3.5 | 3.0 | 2.5 | 3.0 | 3.5 | 2.5 | 2.5 | 2.5 | 3.5 | 4.5 | 4.0 | 3.5 | 1.0 | 4.0 | 1.5 | 3.5 |
| *: The term "<0.10" means that the content is below a detection limit. | | | | | | | | | | | | | | | | | | | |

EP 3 228 195 B1

Example 12

(First Step)

10 g of unground raw material roasted coffee beans having an L value of 27 (*Coffea robusta,* produced in Vietnam) were added to a SOT can (volume: 190 mL), and then 4 g of ion-exchange water was added thereto. The contents were mixed, and then the opening portion was sealed. The procedure was repeated to prepare 13 SOT cans each filled with the raw material roasted coffee beans and ion-exchange water, and each having an opening portion sealed. Subsequently, the cans were subjected to heat treatment with an autoclave at 105°C for 2 hours.

(Second Step)

Subsequently, 166 g of the raw material roasted coffee beans after the heating (corresponding to 120 g of the raw material roasted coffee beans before the heating) were enclosed in an extraction tank of a supercritical extraction device (manufactured by Nitto Koatsu Co., Ltd.), and carbon dioxide in a supercritical state was supplied under an elevated pressure of 28 MPa at 100°C for 10 hours. In this procedure, the supercritical carbon dioxide was caused to pass through a tank filled with water as an entrainer to supply a mixed medium of the supercritical carbon dioxide and the water to the extraction tank. The amount of the supercritical carbon dioxide (in terms of volume of gas at normal temperature and normal pressure) supplied in the operation for extraction was 12.1 $m^3$.

(Post-treatment)

The roasted coffee beans after the treatment were dried with a freeze dryer (FDU-2100, manufactured by Tokyo Rikakikai Co., Ltd.) for 48 hours. Thus, unground roasted coffee beans were obtained.

(Analysis and Evaluation)

The resultant unground roasted coffee beans were ground with a pulverizer (Wonder Blender WB-01, manufactured by Osaka Chemical Co., Ltd.), and 80 g of water for extraction (a solution obtained by dissolving 1 g of phosphoric acid and 0.03 g of 1-hydroxyethane-1,1-diphosphonic acid (HEDPO) in 1 L of ion-exchange water) was added to 0.5 g of the ground coffee beans having an average particle size of 0.030 mm. The extraction was performed by immersing for 10 minutes while maintaining the temperature of the mixture at from 95°C to 99°C, and the supernatant was collected. Thus, a coffee extract solution was obtained. The resultant coffee extract solution was subjected to componential analysis. Further, 100 g of hot water (98°C to 100°C) was added to 5 g of the roasted coffee beans, and the resultant was stirred for 10 minutes and filtrated with a commercially available coffee filter to yield a coffee beverage. The resultant coffee beverage was subjected to a sensory test. The results are shown in Table 3.

Example 13

Unground roasted coffee beans were obtained in the same manner as in Example 12 except that unground raw material roasted coffee beans having an L value of 30 (*Coffea robusta,* produced in Vietnam) were used, and the pressure condition in the second step was changed to 16 Mpa. The resultant roasted coffee beans were subjected to the componential analysis and the sensory test in the same manner as in Example 12. The results are shown in Table 3.

Example 14

Unground roasted coffee beans were obtained in the same manner as in Example 12 except that unground raw material roasted coffee beans having an L value of 29 (*Coffea robusta,* produced in Vietnam) were used, and the extraction temperature in the second step was changed to 70°C. The volume of the supercritical carbon dioxide (in terms of volume of gas at normal temperature and normal pressure) supplied in the operation for extraction was 12.0 $m^3$. The resultant roasted coffee beans were subjected to the componential analysis and the sensory test in the same manner as in Example 12. The results are shown in Table 3.

Example 15

Unground roasted coffee beans were obtained in the same manner as in Example 12 except that the extraction time in the second step was changed to 12 hours. The volume of the supercritical carbon dioxide (in terms of volume of gas at normal temperature and normal pressure) supplied in the operation for extraction was 14.3 $m^3$. The resultant

roasted coffee beans were subjected to the componential analysis and the sensory test in the same manner as in Example 12. The results are shown in Table 3.

Example 16

Unground roasted coffee beans were obtained in the same manner as in Example 12 except that unground raw material roasted coffee beans having an L value of 30 *(Coffea robusta,* produced in Vietnam) were used, the amount of the water added in the first step was changed to 80 mass% with respect to that of the roasted coffee beans, the heating time was changed to 60 minutes, and the entrainer was not used in the second step. The resultant roasted coffee beans were subjected to the componential analysis and the sensory test in the same manner as in Example 12. The results are shown in Table 3.

Example 17

Unground roasted coffee beans were obtained in the same manner as in Example 12 except that the time for extraction with the supercritical carbon dioxide in the second step was changed to 5 hours. The volume of the supercritical carbon dioxide (in terms of volume of gas at normal temperature and normal pressure) supplied in the operation for extraction was 6.6 $m^3$. The resultant roasted coffee beans were subjected to the componential analysis and the sensory test in the same manner as in Example 12. The results are shown in Table 3.

Example 18

Unground roasted coffee beans were obtained in the same manner as in Example 12 except that unground raw material roasted coffee beans having an L value of 27 (*Coffea arabica,* produced in Brazil) were used. The volume of the supercritical carbon dioxide (in terms of volume of gas at normal temperature and normal pressure) supplied in the operation for extraction was 12.8 $m^3$. The resultant roasted coffee beans were subjected to the componential analysis and the sensory test in the same manner as in Example 12. The results are shown in Table 3.

Example 19

Unground roasted coffee beans were obtained in the same manner as in Example 12 except that unground raw material roasted coffee beans having an L value of 18 (*Coffea arabica,* produced in Brazil) were used. The volume of the supercritical carbon dioxide (in terms of volume of gas at normal temperature and normal pressure) supplied in the operation for extraction was 11.8 $m^3$. The resultant roasted coffee beans were subjected to the componential analysis and the sensory test in the same manner as in Example 12. The results are shown in Table 3.

Referential Example 4

Unground raw material roasted coffee beans having an L value of 27 were ground with a pulverizer (Wonder Blender WB-01, manufactured by Osaka Chemical Co., Ltd.) to yield finely ground roasted coffee beans having an average particle size of 0.030 mm. The resultant roasted coffee beans were subj ected to the componential analysis and the sensory test in the same manner as in Example 12. The results are shown in Table 3.

Referential Example 5

Unground raw material roasted coffee beans having an L value of 27 (*Coffea arabica,* produced in Brazil) were ground with a pulverizer (Wonder Blender WB-01, manufactured by Osaka Chemical Co., Ltd.) to yield finely ground roasted coffee beans having an average particle size of 0.030 mm. The resultant roasted coffee beans were subjected to the componential analysis and the sensory test in the same manner as in Example 12. The results are shown in Table 3.

Referential Example 6

Unground raw material roasted coffee beans having an L value of 15.5 (*Coffea arabica*, produced in Brazil) were ground with a pulverizer (Wonder Blender WB-01, manufactured by Osaka Chemical Co., Ltd.) to yield finely ground roasted coffee beans having an average particle size of 0.030 mm. The resultant roasted coffee beans were subjected to the componential analysis and the sensory test in the same manner as in Example 12. The results are shown in Table 3.

Comparative Example 5

Unground roasted coffee beans were obtained in the same manner as in Example 12 except that the second step was not carried out. The resultant roasted coffee beans were subj ected to the componential analysis and the sensory test in the same manner as in Example 12. The results are shown in Table 3.

Comparative Example 6

Unground roasted coffee beans were obtained in the same manner as in Example 12 except that the first step was not carried out. The volume of the supercritical carbon dioxide (in terms of volume of gas at normal temperature and normal pressure) supplied in the operation for extraction was 12 .3 m$^3$. The resultant roasted coffee beans were subjected to the componential analysis and the sensory test in the same manner as in Example 12. The results are shown in Table 3.

Comparative Example 7

Unground roasted coffee beans were obtained in the same manner as in Example 18 except that the second step was not carried out. The resultant roasted coffee beans were subj ected to the componential analysis and the sensory test in the same manner as in Example 12. The results are shown in Table 3.

Table 3

| | | Example | | | | | | | | Referential Example | | | Comparative Example | | |
|---|---|---|---|---|---|---|---|---|---|---|---|---|---|---|---|
| | | 12 | 13 | 14 | 15 | 16 | 17 | 18 | 19 | 4 | 5 | 6 | 5 | 6 | 7 |
| First step | Form | Whole | Whole | Whole | Whole | Whole | Whole | Whole | Whole | Whole | Whole | whole | Whole | Whole | Whole |
| | L value | 27 | 30 | 29 | 27 | 30 | 27 | 27 | 18 | 27 | 27 | 15.5 | 27 | 27 | 27 |
| | Bean species | Robusta | Robusta | Robusta | Robusta | Robusta | Robusta | Arabica | Arabica | Robusta | Arabica | Arabica | Robusta | Robusta | Arabica |
| | Amount of water added (with respect to that of beans, mass%) | 40 | 40 | 40 | 40 | 80 | 40 | 40 | 40 | - | - | - | 40 | - | 40 |
| | Heating temperature (°C) | 105 | 105 | 105 | 105 | 105 | 105 | 105 | 105 | - | - | - | 105 | - | 105 |
| | Heating time (min) | 120 | 120 | 120 | 120 | 60 | 120 | 120 | 120 | - | - | - | 120 | - | 120 |

| | | Example | | | | | | | | Referential Example | | | Comparative Example | | |
|---|---|---|---|---|---|---|---|---|---|---|---|---|---|---|---|
| | | 12 | 13 | 14 | 15 | 16 | 17 | 18 | 19 | 4 | 5 | 6 | 5 | 6 | 7 |
| Second step | Pressure condition (Mpa) | 28 | 16 | 28 | 28 | 28 | 28 | 28 | 28 | - | - | - | - | 28 | - |
| | Extraction temperature (°C) | 100 | 100 | 70 | 100 | 100 | 100 | 100 | 100 | - | - | - | - | 100 | - |
| | Extraction time (hr) | 10 | 10 | 10 | 12 | 10 | 5 | 10 | 10 | - | - | - | - | 10 | - |
| | Extraction ratio (gas, m³/g beans) | 0.10 | 0.07 | 0.10 | 0.12 | 0.10 | 0.06 | 0.11 | 0.10 | - | - | - | - | 0.12 | - |
| | Flow rate of $CO_2$ (gas, m³) | 12.1 | 7.9 | 12.0 | 14.3 | 12.1 | 6.6 | 12.8 | 11.8 | - | - | - | - | 12.3 | - |
| | Flow rate of $CO_2$ (gas, m³/h) | 1.21 | 0.79 | 1.20 | 1.19 | 1.21 | 1.32 | 1.28 | 1.18 | - | - | - | - | 1.23 | - |
| | Use of entrainer | Used | Used | Used | Used | Not used | Used | Used | Used | - | - | - | - | Used | - |
| Analysis | (A) CGA (g/kg) | 35.0 | 37.0 | 37.4 | 36.0 | 39.1 | 35.0 | 28.0 | 8.5 | 34.0 | 26.5 | 2.5 | 34.0 | 37.0 | 26.5 |
| | (B) HHQ (mg/kg) | 10.0 | 14.0 | 7.8 | 8.6 | 12.0 | 10.0 | 9.0 | 15.0 | 140.0 | 130.0 | 245.0 | 20.0 | 135.0 | 20.0 |
| | (C) 5-HMF (mg/kg) | 4.0 | 38.0 | 5.0 | 3.5 | 18.7 | 25.0 | 7.0 | 14.0 | 233.0 | 520.0 | 45.0 | 70.0 | 80.0 | 80.0 |
| | (D) Caf (g/kg) | 2.9 | 14.3 | 3.3 | 2.2 | 5.8 | 6.5 | 1.9 | 0.9 | 23.7 | 13.7 | 13.7 | 23.7 | 18.0 | 13.7 |
| | Mass ratio (C)/(A) | 0.0001 | 0.0010 | 0.0001 | 0.0001 | 0.0005 | 0.0007 | 0.0003 | 0.00165 | 0.0069 | 0.01962 | 0.01800 | 0.0021 | 0.0022 | 0.00302 |

(continued)

| | | Example | | | | | | | | Referential Example | | | Comparative Example | | |
|---|---|---|---|---|---|---|---|---|---|---|---|---|---|---|---|
| | | 12 | 13 | 14 | 15 | 16 | 17 | 18 | 19 | 4 | 5 | 6 | 5 | 6 | 7 |
| Evaluation | Coarseness | 5.0 | 4.0 | 5.0 | 5.0 | 3.5 | 4.0 | 5.0 | 4.0 | 1.5 | 1.5 | 1.0 | 1.5 | 2.0 | 1.0 |
| | Clean aftertaste | 5.0 | 4.0 | 5.0 | 5.0 | 3.5 | 4.0 | 5.0 | 4.0 | 1.0 | 1.5 | 1.0 | 1.5 | 2.0 | 2.0 |
| | Sourness | 3.0 | 3.5 | 2.5 | 3.0 | 4.0 | 3.0 | 3.0 | 3.5 | 4.5 | 4.0 | 5.0 | 1.0 | 4.0 | 1.0 |

It was found from Table 2 and Table 3 that roasted coffee beans useful as a raw material for a coffee beverage having suppressed coarseness, and having a clean aftertaste and a favorable taste were able to be obtained by adding water to raw material roasted coffee beans, heating the mixture, and subjecting the resultant to supercritical carbon dioxide extraction.

In addition, it was found from Table 2 and Table 3 that roasted coffee beans useful as a raw material for a coffee beverage having suppressed coarseness, and having a good sourness balance, a clean aftertaste, and a favorable taste were able to be obtained by controlling the contents of the chlorogenic acid (A), the hydroxyhydroquinone (B), the 5-hydroxymethylfurfural (C), and the caffeine (D) in roasted coffee beans having an L value of from 15 to 45 to specific ranges.

**Claims**

1. A method of producing roasted coffee beans, comprising:

   a first step of adding water to raw material roasted coffee beans, wherein the amount of the water is from 5 mass% to 110 mass% with respect to that of the raw material roasted coffee beans, followed by heating of the resultant; and
   a second step of subjecting the raw material roasted coffee beans after the first step to supercritical carbon dioxide extraction.

2. The method of producing roasted coffee beans according to claim 1, wherein the raw material roasted coffee beans to be used in the first step is ground raw material roasted coffee beans.

3. The method of producing roasted coffee beans according to claim 2, wherein the heating in the first step is carried out for from 0.3 hour to 10 hours.

4. The method of producing roasted coffee beans according to claim 2 or 3, wherein the heating in the first step is carried out at a temperature of from 20°C to 80°C.

5. The method of producing roasted coffee beans according to any one of claims 2 to 4, wherein the extraction in the second step is carried out at a temperature of from 35°C to 100°C.

6. The method of producing roasted coffee beans according to any one of claims 2 to 5, wherein the extraction in the second step is carried out for from 0.5 hour to 10 hours.

7. The method of producing roasted coffee beans according to claim 1, wherein unground raw material roasted coffee beans are used in the first step.

8. The method of producing roasted coffee beans according to claim 7, wherein, in the second step, the supercritical carbon dioxide extraction is carried out in the presence of an entrainer.

9. The method of producing roasted coffee beans according to claim 7 or 8, wherein the heating in the first step is carried out for from 0.1 minute to 10 hours.

10. The method of producing roasted coffee beans according to any one of claims 7 to 9, wherein the heating in the first step is carried out at a temperature of from 50°C to 150°C.

11. The method of producing roasted coffee beans according to any one of claims 7 to 10, wherein the supercritical carbon dioxide extraction in the second step is carried out at an extraction temperature of from 50°C to 150°C.

12. The method of producing roasted coffee beans according to any one of claims 7 to 11, wherein the extraction in the second step is carried out for from 0.5 hour to 20 hours.

13. The method of producing roasted coffee beans according to any one of claims 1 to 12, wherein the raw material roasted coffee beans have an L value of from 15 to 45.

14. Roasted coffee beans having an L value of from 15 to 45, the roasted coffee beans comprising, per kg of the roasted coffee beans, 6.0 g to 90.0 g of a chlorogenic acid (A), 50 mg or less of hydroxyhydroquinone (B), 70 mg or less of 5-hydroxymethylfurfural (C), and 9.0 g or less of caffeine (D) .

15. The roasted coffee beans according to claim 14, wherein a mass ratio of the 5-hydroxymethylfurfural (C) to the chlorogenic acid (A), [(C)/(A)], is 0.006 or less.

16. The roasted coffee beans according to claim 14 or 15, wherein the roasted coffee beans comprise ground roasted coffee beans.

17. A coffee beverage, comprising:

0.01 mass% to 0.45 mass% of a chlorogenic acid (A);
2 ppm by mass or less of hydroxyhydroquinone (B);
3 ppm by mass or less of 5-hydroxymethylfurfural (C); and
0.04 mass% or less of caffeine (D).

18. The coffee beverage according to claim 17, wherein a mass ratio of the 5-hydroxymethylfurfural (C) to the chlorogenic acid (A), [(C)/(A)], is 0.0055 or less.

19. The coffee beverage according to claim 17 or 18, wherein a mass ratio of the caffeine (D) to the chlorogenic acid (A), [(D)/(A)], is from 0.02 to 0.5.

**Patentansprüche**

1. Verfahren zur Herstellung gerösteter Kaffeebohnen, umfassend:

einen ersten Schritt, in welchem Wasser zu gerösteten Rohmaterial-Kaffeebohnen hinzugegeben wird, wobei die Menge des Wassers von 5 Massen% bis 110 Massen% bezogen auf die gerösteten Rohmaterial-Kaffeebohnen beträgt, gefolgt von Erhitzen des Resultierenden; und
einen zweiten Schritt, in welchem die gerösteten Rohmaterial-Kaffeebohnen nach dem ersten Schritt einer Extraktion mit überkritischen Kohlenstoffdioxid unterzogen werden.

2. Verfahren zur Herstellung gerösteter Kaffeebohnen gemäß Anspruch 1, wobei die im ersten Schritt zu verwendenden gerösteten Rohmaterial-Kaffeebohnen gemahlene geröstete Rohmaterial-Kaffeebohnen sind.

3. Verfahren zur Herstellung gerösteter Kaffeebohnen gemäß Anspruch 2, wobei das Erhitzen im ersten Schritt für 0,3 Stunden bis 10 Stunden durchgeführt wird.

4. Verfahren zur Herstellung gerösteter Kaffeebohnen gemäß Anspruch 2 oder 3, wobei das Erhitzen im ersten Schritt bei einer Temperatur von 20 °C bis 80 °C durchgeführt wird.

5. Verfahren zur Herstellung gerösteter Kaffeebohnen gemäß einem der Ansprüche 2 bis 4, wobei die Extraktion im zweiten Schritt bei einer Temperatur von 35 °C bis 100 °C durchgeführt wird.

6. Verfahren zur Herstellung gerösteter Kaffeebohnen gemäß einem der Ansprüche 2 bis 5, wobei die Extraktion im zweiten Schritt für 0,5 Stunden bis 10 Stunden durchgeführt wird.

7. Verfahren zur Herstellung gerösteter Kaffeebohnen gemäß Anspruch 1, wobei im ersten Schritt ungemahlene geröstete Rohmaterial-Kaffeebohnen verwendet werden.

8. Verfahren zur Herstellung gerösteter Kaffeebohnen gemäß Anspruch 7, wobei die Extraktion mit überkritischem Kohlenstoffdioxid im zweiten Schritt in Gegenwart eines Schleppmittels durchgeführt wird.

9. Verfahren zur Herstellung gerösteter Kaffeebohnen gemäß Anspruch 7 oder 8, wobei das Erhitzen im ersten Schritt für 0,1 Minuten bis 10 Stunden durchgeführt wird.

10. Verfahren zur Herstellung gerösteter Kaffeebohnen gemäß einem der Ansprüche 7 bis 9, wobei das Erhitzen im ersten Schritt bei einer Temperatur von 50 °C bis 150 °C durchgeführt wird.

11. Verfahren zur Herstellung gerösteter Kaffeebohnen gemäß einem der Ansprüche 7 bis 10, wobei die Extraktion mit überkritischem Kohlenstoffdioxid im zweiten Schritt bei einer Extraktionstemperatur von 50 °C bis 150 °C durchgeführt wird.

12. Verfahren zur Herstellung gerösteter Kaffeebohnen gemäß einem der Ansprüche 7 bis 11, wobei die Extraktion im zweiten Schritt für 0,5 Stunden bis 20 Stunden durchgeführt wird.

13. Verfahren zur Herstellung gerösteter Kaffeebohnen gemäß einem der Ansprüche 1 bis 12, wobei die gerösteten Rohmaterial-Kaffeebohnen einen L-Wert von 15 bis 45 aufweisen.

14. Geröstete Kaffeebohnen mit einem L-Wert von 15 bis 45, wobei die gerösteten Kaffeebohnen, pro kg der gerösteten Kaffeebohnen, 6,0 g bis 90,0 g einer Chlorogensäure (A), 50 mg oder weniger Hydroxyhydrochinon (B), 70 mg oder weniger 5-Hydroxymethylfurfural (C) und 9,0 g oder weniger Koffein (D) umfassen.

15. Geröstete Kaffeebohnen gemäß Anspruch 14, wobei ein Massenverhältnis des 5-Hydroxymethylfurfurals (C) zu der Chlorogensäure (A), [(C)/(A)], 0,006 oder weniger beträgt.

16. Geröstete Kaffeebohnen gemäß Anspruch 14 oder 15, wobei die gerösteten Kaffeebohnen gemahlene geröstete Kaffeebohnen umfassen.

17. Kaffeegetränk, umfassend:

0,01 Massen% bis 0,45 Massen% einer Chlorogensäure (A) ;
2 ppm per Masse oder weniger Hydroxyhydrochinon (B) ;
3 ppm per Masse oder weniger 5-Hydroxymethylfurfural (C); und
0,04 Massen% oder weniger Koffein (D).

18. Kaffeegetränk gemäß Anspruch 17, wobei ein Massenverhältnis des 5-Hydroxymethylfurfurals (C) zu der Chlorogensäure (A), [(C)/(A)], 0,0055 oder weniger beträgt.

19. Kaffeegetränk gemäß Anspruch 17 oder 18, wobei ein Massenverhältnis des Koffeins (D) zu der Chlorogensäure (A), [(D)/(A)], von 0,02 bis 0,5 beträgt.

**Revendications**

1. Procédé de production de grains de café torréfiés, comprenant :

une première étape d'addition d'eau à des grains de café torréfiés bruts, dans laquelle la quantité d'eau est de 5 % en masse à 110 % en masse par rapport à celle des grains de café torréfiés bruts, suivie par le chauffage de ce qui en résulte ; et
une seconde étape de soumission des grains de café torréfiés bruts après la première étape à une extraction au dioxyde de carbone supercritique.

2. Procédé de production de grains de café torréfiés selon la revendication 1, dans lequel les grains de café torréfiés bruts à utiliser dans la première étape sont des grains de café torréfiés bruts moulus.

3. Procédé de production de grains de café torréfiés selon la revendication 2, dans lequel le chauffage dans la première étape est réalisé pendant 0,3 heure à 10 heures.

4. Procédé de production de grains de café torréfiés selon la revendication 2 ou 3, dans lequel le chauffage dans la première étape est réalisé à une température de 20 °C à 80 °C.

5. Procédé de production de grains de café torréfiés selon l'une quelconque des revendications 2 à 4, dans lequel l'extraction dans la seconde étape est réalisée à une température de 35 °C à 100 °C.

**6.** Procédé de production de grains de café torréfiés selon l'une quelconque des revendications 2 à 5, dans lequel l'extraction dans la seconde étape est réalisée pendant 0,5 heure à 10 heures.

**7.** Procédé de production de grains de café torréfiés selon la revendication 1, dans lequel des grains de café torréfiés bruts non moulus sont utilisés dans la première étape.

**8.** Procédé de production de grains de café torréfiés selon la revendication 7, dans lequel, dans la seconde étape, l'extraction au dioxyde de carbone supercritique est réalisée en présence d'un entraîneur.

**9.** Procédé de production de grains de café torréfiés selon la revendication 7 ou 8, dans lequel le chauffage dans la première étape est réalisé pendant 0,1 minute à 10 heures.

**10.** Procédé de production de grains de café torréfiés selon l'une quelconque des revendications 7 à 9, dans lequel le chauffage dans la première étape est réalisé à une température de 50 °C à 150 °C.

**11.** Procédé de production de grains de café torréfiés selon l'une quelconque des revendications 7 à 10, dans lequel l'extraction au dioxyde de carbone supercritique dans la seconde étape est réalisée à une température d'extraction de 50 °C à 150 °C.

**12.** Procédé de production de grains de café torréfiés selon l'une quelconque des revendications 7 à 11, dans lequel l'extraction dans la seconde étape est réalisée pendant 0,5 heure à 20 heures.

**13.** Procédé de production de grains de café torréfiés selon l'une quelconque des revendications 1 à 12, dans lequel les grains de café torréfiés bruts présentent une valeur L de 15 à 45.

**14.** Grains de café torréfiés présentant une valeur L de 15 à 45, les grains de café torréfiés comprenant, par kg des grains de café torréfiés, de 6,0 à 90,0 g d'un acide chlorogénique (A), 50 mg ou moins d'hydroxyhydroquinone (B), 70 mg ou moins de 5-hydroxyméthylfurfural (C) et 9,0 g ou moins de caféine (D).

**15.** Grains de café torréfiés selon la revendication 14, dans lesquels un rapport en masse du 5-hydroxyméthylfurfural (C) à l'acide chlorogénique (A), [(C)/(A)] est de 0,006 ou moins.

**16.** Grains de café torréfiés selon la revendication 14 ou 15, dans lesquels les grains de café torréfiés comprennent des grains de café torréfiés moulus.

**17.** Boisson à base de café, comprenant :

de 0,01 % en masse à 0,45 % en masse d'un acide chlorogénique (A) ;
2 ppm en masse ou moins d'hydroxyhydroquinone (B) ;
3 ppm en masse ou moins de 5-hydroxyméthylfurfural (C) ; et
0,04 % en masse ou moins de caféine (D).

**18.** Boisson à base de café selon la revendication 17, dans laquelle un rapport en masse du 5-hydroxyméthylfurfural (C) à l'acide chlorogénique (A), [(C)/(A)] est de 0,0055 ou moins.

**19.** Boisson à base de café selon la revendication 17 ou 18, dans laquelle un rapport en masse de la caféine (D) à l'acide chlorogénique (A), [(D)/(A)] est de 0,02 à 0,5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012183035 A
- JP 2013110972 A
- JP 2011223996 A
- JP 2008193933 A
- JP 2012095647 A
- JP 3160949 A
- JP 1309640 A

- JP 2020249 A
- JP 3127973 A
- US 4247570 A
- US 3843824 A
- US 4411923 A
- US 20120328762 A
- EP 0151202 A

**Non-patent literature cited in the description**

- Glossary of Technical Terms in Japanese Industrial Standards. Japanese Standards Association, 30 March 2001

- Soft Drinks. Korin, 25 December 1989, 421